# EUROPEAN PATENT SPECIFICATION

(11) **EP 3 362 374 B1**
(45) Date of publication and mention of the grant of the patent: **27.11.2019**
(21) Application number: 16778402.4
(22) Date of filing: 10.10.2016
(51) Int. Cl.: B65D 41/04, B65D 51/18, B65D 41/62

(54) **CLOSURE FOR A PRODUCT RETAINING CONTAINER AND METHOD FOR MANUFACTURING THEREFOR**
VERSCHLUSS FÜR EINEN PRODUKTAUFBEWAHRUNGSBEHÄLTER UND VERFAHREN ZUR HERSTELLUNG DAVON
FERMETURE POUR UN RÉCIPIENT DE CONTENANT DE PRODUIT ET SON PROCÉDÉ DE FABRICATION

(30) Priority: 13.10.2015 US 201562240933 P
(43) Date of publication of application: 22.08.2018
(73) Proprietor: Vinventions USA, LLC, Zebulon, NC 27597 (US); Aagaard, Olav Marcus, 3051 HX Rotterdam (NL); Kirch, Marco Josef Otto, Cary, North Carolina 27519 (US); Thompson, Malclom Joseph, Raleigh, North Carolina 2760 (US)
(72) Inventor: AAGAARD, Olav Marcus, 3051 HX Rotterdam (NL); KIRCH, Marco Josef Otto, Cary, North Carolina 27519 (US); THOMPSON, Malclom Joseph, Raleigh, North Carolina 27609 (US)
(74) Representative: Cohausz & Florack
(86) International application number: PCT/EP2016/074142
(87) International publication number: WO 2017/063976

(56) References cited:
- GB-A- 713 634
- US-B1- 6 929 137

## Description

### Technical Field

The disclosure relates to a closure for a product-retaining container, according to the preamble of claim 1; to a method of manufacturing a closure, according to the preamble of claim 7; to a closure prepared by said method and to the use of said closure.

### Technical Background

In view of the wide variety of products that are dispensed from containers, numerous constructions have evolved for container closures, including, for example, screw caps, stoppers, corks, crown caps, and the like. Generally, products such as vinegar, vegetable oils, laboratory liquids, detergents, honey, condiments, spices, alcoholic beverages, and the like, impose similar requirements on the type and construction of the closure means used for containers for these products. However, wine sold in bottles represents the most demanding product in terms of bottle closure technology, due to the numerous and burdensome requirements placed upon the closures used for wine bottles. In an attempt to best meet these demands, most wine bottle closures or stoppers have historically been produced from a natural material known as "cork".

While natural cork still remains a dominant material for wine closures, synthetic wine closures have become increasingly popular over the last years, largely due to the shortage in high quality natural cork material and the problem of wine spoilage as a result of "cork taint", a phenomenon that is associated with natural cork materials. In addition, there has recently been a growing acceptance and use of screw caps as closures for wine bottles. These caps are advantageous due to their relatively low cost, ease of removal and reapplication, the avoidance of "cork taint" with this type of bottle closure, and the possibility, by selection of an appropriate cap liner, to achieve a hermetic seal. The seal provided by the liner can be virtually impermeable, for example, for wines to be consumed young, or the seal can provide oxygen management capabilities, for example, controlled oxygen release inside a sealed bottle for wines intended for ageing. Other advantages of screw caps include the ability to open them anywhere without needing a corkscrew or other implement, the greater ease of tightly re-sealing a bottle, and the ability for screw caps to be customized with decoration, such as colour, indices, and the like.

Metal and plastic screw caps are known for sealing bottles containing beverages. Metal screw caps are often used for alcoholic beverages, such as wine and spirits. Plastic screw caps are more often used for non-alcoholic or carbonated beverages, such as water or sodas. Rolled-on screw cap closures typically comprise a cap having interior threads adapted to interoperate with exterior threads on a container finish, for example on the upper opening of a bottle. Cap closures typically also comprise a seal or liner, to prevent leakage of liquid and/or gas, and to prevent spoilage, for example due to oxidation. In a metal screw cap (for example, a cap made from aluminum), the interior threads of the cap may, for example, be produced by pressure forming the cap onto the exterior threads of the container finish, for example by pressing revolving rollers against the side of the finish during the bottling process. In this case, the threads embody an integral part of the cap's form and are externally visible, detracting from the aesthetics of the cap.

The manufacture of metal (e.g., aluminum) screw caps involves numerous steps. A flat sheet of aluminum is first printed or coated in a uniform colour and dried. End cap decoration can be applied to the flat aluminum sheet after drying. The sheet is then die cut to form circular sections, which are subsequently formed into the cap shape, or shell, by multiple (generally, three) punching and deep drawing operations. These forming operations are often carried out in three separate stages in order to reduce damage and strain in the resulting shell. The shell is then usually printed or coated again, for example, using offset or spray printing, in order to cover stress-related imperfections caused by the punching and drawing operations. A decoration can also be added to individual formed caps, using printing techniques such as offset, hot-stamping, silkscreen, and the like. Further drying operations follow these printing steps. Subsequent jointing and profiling (rollforming) provide the required cuts, beads and knurlings, and finally a liner is inserted to make a seal with the mouth of a bottle.

The conventional metal screw cap manufacturing process has some drawbacks. It is labour-, energy- and capital-intensive, requiring multiple printing, drying, and forming operations. It is not possible to print all desired colours and decorations on the flat sheet prior to forming the cap shape, because, for example, the decorations in particular can be destroyed by the forming operations, and the forming and deep drawing operations can degrade the pre-printed colour on at least the sides of the cap. Printing and drying are thus carried out both before and after formation of the three-dimensional cap shape from the flat sheet. However, printing on the formed caps individually is more complex and slower than printing a design multiple times simultaneously or almost simultaneously on a flat sheet. If the screw cap head should be embossed, this can require an additional process step after the forming operations. Cutting circular shapes out of the pre-printed flat aluminum sheet results in scrap printed aluminum, which must be recycled or discarded. Furthermore, the metal caps require a minimum aluminum thickness in order to achieve a suitable strength. This results, for example, in a minimum requirement on the amount of aluminum necessary per cap, and thus also on the weight of the finished caps. Not only the amount of aluminum used, but also the weight of the raw materials and of the finished caps, detrimentally impact the environment and the economics of metal screw caps, for example through aluminum processing and prices, as well as shipping costs and the environmental impact of shipping of both the raw materials and the finished caps. The economics of metal screw caps are, in fact, very dependent upon aluminum prices.

Moreover, it is often desirable for caps for use on wine bottles to resemble traditional wine bottle capsules as closely as possible in appearance. Traditional capsules do not have a screw thread, and often include embossing on the top (head) surface. Metal screw caps, on the other hand, often have a thread that is visible externally. In order to overcome this, some metal screw caps incorporate a plastic insert with an inner thread that engages with the outer thread on the bottle neck, and the outer metal cap is not threaded. Such an insert, if used, can incorporate a liner. The insert fits entirely into the screw cap shell and is not visible before opening the cap. Materials and methods for manufacturing a metal screw cap closure with a plastic insert are described, for example in U.S. Patent No. 6,403,173 B1.

The caps, once finished, are packed randomly for shipping. This random packing results in a large volume to be shipped, thereby adding to shipping costs.

In the past, screw caps have been known to prevent substantially any oxygen ingress into a container, making screw caps more suitable for wines intended to be consumed young. Recent advances in liner technology have improved oxygen management capabilities, for example, by controlled release of oxygen from the liner itself, so that screw cap closures can also be used for wines intended to age in the bottle.

U.S. Patent No. 6,929,137 B1, discloses a closure according to the preamble of claim 1; and a method for manufacturing a closure, according to the preamble of claim 7.

There exists a need for screw caps for bottles containing alcoholic beverages, such as wine, which overcome the above-described disadvantages of conventional aluminum screw caps. Using the present disclosure, it is possible to reduce the amount of material and the weight of the caps, and to simplify the manufacturing process by reducing the number of operations, all of which can achieve cost and environmental advantages. It is also possible to improve packing efficiency, reducing shipping costs significantly, and to permit more effective means for cap application on the bottle, by modifying the shape of the caps, which can be easily achieved with the present disclosure. In addition, decoration and embossing can be greatly simplified compared to conventional aluminum screw caps. The closures of the present disclosure have, moreover, an appearance similar to traditional wine bottle capsules.

### Summary

The invention is defined by a closure according to claim 1; by a method for manufacturing a closure, according to claim 7; by a closure according to claim 15 prepared by said method; and by the use of said closure, according claim 16.

Disclosed herein are closures for containers, in particular closures for receptacles for beverages, in particular screw cap closures, in particular screw cap closures for bottles. In one aspect, the closure comprises an inner part comprising an inner part head and an inner part skirt comprising a thread for co-operating with a thread finish on the neck of the bottle; and an outer part comprising a film having at least two layers, the outer part at least partially enclosing and hiding at least the inner part skirt. According to one aspect, the outer part comprises at least one longitudinal join.

In another aspect, a method for manufacturing a closure is disclosed, comprising at least the method steps of providing a closure outer part, providing a closure inner part, and affixing the closure inner part and the closure outer part to each other. Yet other aspects relate to the use of a closure for sealing a container, in particular a bottle, and a closure system comprising a container, in particular a bottle, closed with a closure as defined herein. A method not forming part of the invention, for closing a container with a closure according to the present disclosure is also provided.

While the closure may, in principle, relate to any kind of closure, due to the special requirements in the wine industry, the closure of the present disclosure is particularly useful as a closure for wine bottles.

Embodiments disclosed herein enable winemakers to choose a closure that is more environmentally friendly and economical than aluminum screw caps, with improved printability and decoration possibilities, similar appearance to traditional wine bottle capsules, and consistent, customizable oxygen management behavior.

While embodiments of the present disclosure are well suited for use in the wine industry, the disclosure is not so limited. Rather, the concepts of the present disclosure can be extended to other containers that have need of a screw cap closure that can be made more simply, more economically and more lightweight than aluminum screw caps, and allows greater flexibility and ease of application of designs and indices to the closure, without loss of sealing ability or oxygen management capabilities.

### BRIEF DESCRIPTION OF THE DRAWINGS

Further features and advantages of the embodiments disclosed herein will become apparent from the following detailed description of some of its embodiments shown by way of non-limiting examples in the accompanying drawings, in which:
Figure 1 is an exploded schematic cross-sectional view of an exemplary embodiment of a screw cap type closure according to one aspect of the present disclosure;
Figure 2 is an exploded schematic view of the components shown in Figure 1;
Figure 3 is a schematic view of a bilayer film for use in an outer part according to one aspect of the present disclosure;
Figure 4 is a schematic view of an outer part with a longitudinal join according to an aspect of the present disclosure;
Figure 5 is a schematic view of an outer part with a longitudinal join and a strip according to another exemplary aspect of the present disclosure;
Figure 6 shows a tapered form of outer part 60;
Figure 7 illustrates schematically the engagement of a bottle neck with a closure according to one aspect of the present disclosure; and
Figure 8 is a schematic view of a closure according to an exemplary embodiment of the present disclosure, fitted on a wine bottle.

### DETAILED DESCRIPTION

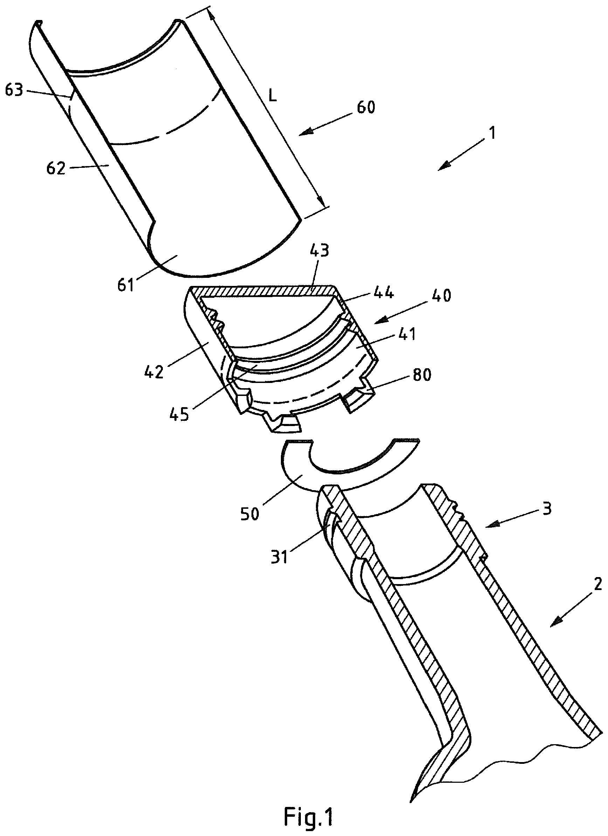

By referring to Figures 1 to 8, along with the following detailed disclosure, the construction of the closure of the certain aspects disclosed herein can best be understood.

In the Figures, as well as in the following detailed disclosure, the closure of various ones of the embodiments is depicted and discussed as a bottle closure for wine products. However, the various embodiments can be applicable as a closure for use in sealing and retaining any desired product in any desired closure system. Due to the stringent and difficult demands and requirements placed upon closures for wine products, the following detailed disclosure focuses upon the applicability of the bottle closures as a closure for wine bottles. Nevertheless it is to be understood that this detailed discussion is provided merely for exemplary purposes and is not intended to limit the embodiments disclosed herein to this particular application and embodiment.

Embodiments disclosed herein provide for closures for containers. While the closure may, in principle, relate to any kind of closure, due to the special requirements in the wine industry, the closure of the present disclosure is particularly useful as a closure for wine bottles.

All details and particulars defined herein and pertaining to the methods of manufacturing closures according to the present disclosure are also relevant to the closures disclosed herein and form part of the disclosure regarding the closures. Likewise, all details and particulars defined herein and pertaining to closures according to the present disclosure are also relevant to the methods of manufacturing closures disclosed herein and form part of the disclosure regarding the methods of manufacturing closures. The features of the aspects and embodiments disclosed herein can be combined with each other in any way to achieve closures, methods and systems of the present disclosure.

As used herein the terms "receptacle for beverages" or "product retaining container" are meant to include any receptacle suitable for liquids, such as bottles, jars, flasks, canisters, tins, vials and the like. In an exemplary embodiment, the receptacle for beverages is a bottle for alcoholic beverages, in particular a wine bottle. The term "closure" as used herein applies to any means for effectively closing receptacles for beverages or product retaining containers in general. Such closures include, but are not limited to, screw caps, stoppers, corks, crown caps, latches, seals and lids. The disclosure particularly relates to screw cap closures. The term "welded join" as used herein is intended to mean a join formed primarily by means of welding. By "welding" is meant application of sufficient heat to melt at least partially one or more of the components to be welded, such that interpenetration takes place and forms a join, and subsequent cooling to freeze the join. The term "adhesive join" as used herein is intended to mean a join formed primarily by adhesive means, for example by application of one or more adhesives, which may form an adhesive bond at ambient temperature, or may require heating and/or application of pressure to form an adhesive bond.

Embodiments disclosed herein provide for a closure for a receptacle for beverages in the form of a bottle with a neck, the closure comprising at least:
a) an inner part comprising at least one inner part plastic material, the inner part comprising an inner part inner surface, an inner part outer surface, an inner part head and an inner part skirt, the inner part head optionally comprising additional sealing means and the inner part skirt comprising an inner thread, particularly on its inner surface, for co-operating with a thread finish on the neck of the bottle;
b) an outer part comprising an outer part inner surface and an outer part outer surface, the outer part comprising a film, the film comprising at least a first layer and at least one further layer, at least one layer, in particular at least the first layer, comprising at least one outer part plastic material P, the outer part enclosing and hiding at least the inner part skirt, optionally enclosing and hiding the inner part skirt and the inner part head; according to one aspect, the outer part encloses and hides the inner part skirt and does not enclose and hide the inner part head;
at least a portion of the outer part inner surface co-operating with at least a portion of the inner part outer surface such that the inner part and the outer part are fixed together;
at least the inner part comprising pilfer-proof means (or pilfer-proof element), also referred to as tamper-evident means (or tamper-proof element), and
the outer part having a length sufficient to hide, at least before the first opening of the closure, the inner part skirt and the pilfer-proof means.

The closure construction according to the present disclosure permits the convenience of a screw cap closure while maintaining the appearance of a traditional capsule, without an externally visible thread. In addition, oxygen management capabilities can be achieved, for example by selection of a suitable liner from those known to the skilled person.

The closure outer part comprises an outer part inner surface and an outer part outer surface. The outer part outer surface forms the outermost surface, in particular the outer peripheral surface of the closure and optionally also at least a part of the outer surface of the head of the closure. At least a portion of the outer part inner surface cooperates with at least a portion of the inner part outer surface such that the inner part and the outer part are fixed together. The outer part cooperates in particular with at least a portion of the outer surface of the inner part skirt, in particular at least a portion of the peripheral outer surface of the inner part, in particular substantially the entire peripheral outer surface of the inner part, or with substantially the entire outer surface of the inner part skirt. The outer part can additionally or alternatively cooperate with substantially the entire outer surface of the inner part head or with a portion thereof, for example a portion comprising the circumferential area thereof to an extent of up to about 5 mm, 4 mm, 3 mm, 2 mm or 1 mm from the outer peripheral extent of the closure.

The closure outer part preferably has a tubular form comprising two mutually opposing tube ends. The tubular form can be substantially cylindrical, i.e. having a substantially uniform diameter along the entire length of the outer part. Alternatively, the outer part can have a tapered tubular form such that the diameter thereof progressively increases on descending from the lowest point at which the outer part is fixed to the inner part towards the bottom of the outer part furthest away from the closure head. If the closure outer part is tapered, the tapered portion will generally start at or below the lowest point where the outer part is fixed to the inner part. In particular, if the outer part is tapered, only the portion of the outer part skirt below where the outer part is fixed to the inner part is tapered. A tapered closure form has the advantage of being stackable, thus reducing packing volume and transport costs. If the closure outer part is tapered, then the wider, bottom end can have a diameter of about twice the diameter at the narrower end, preferably has a diameter up to about 80% greater than the diameter at the narrower end, whereby diameters at the wider end are preferably up to about 70% greater, or up to 60% greater, or up to 50% greater, or up to 40% greater, or up to 30% greater than the diameter at the narrower end.

The tubular outer part can be open at each tube end, or can comprise one substantially flat closed tube end forming the head, or top, of the outer part, in particular of the closure. If the outer part is tapered, then the closed end is at the narrow end. According to a preferred aspect of the closure, the inner part skirt is enclosed and hidden by the closure outer part, and the inner part head is substantially not enclosed or hidden by the closure outer part. In this aspect, the closure outer part is open at both ends and the closure inner part head forms the closed end, or head, or top, of the closure. According to this aspect, the outer surface of the inner part head is outwardly visible and can comprise one or more decorations, such as colour, printing, embossing, and the like.

In an alternative aspect, the outer part is closed at one end, the closed end covering the inner part head and forming the visible head, or top, of the closure.

The top of the closure can be covered with an end cap, for example made from aluminum, tin, plastic, or any other suitable material that can be decorated, embossed, coloured, and the like. An end cap can be comprised irrespective of whether the closure outer part is open or closed at the head end. The end cap can cover only the head of the closure, or can extend radially up to 5 mm, particularly up to 4 mm, or particularly up to 3 mm beyond the edge of the head and around the corresponding portion of the outer part. If an end cap is comprised, no part of the closure inner part is visible prior to opening the closure. The visible colour and decoration of closure head, in particular of the inner part head or of an end cap, are generally selected to match those of the closure outer part, so that the closure has a substantially uniform overall appearance.

The outer part comprises, and preferably is formed from, a film comprising at least two layers: a first layer and at least one further layer. The film can comprise two layers, or can comprise three, four, five or more layers. According to a preferred aspect, the film comprises two layers. According to another preferred aspect, the film comprises three layers. Colour or decoration incorporated into the outer part is not considered herein as a layer unless defined herein as a layer. Adhesives used to bond the film layers to each other or to bond the outer part to the inner part are likewise not considered herein as layers unless otherwise defined herein.

According to a preferred aspect, the first layer forms the inner layer of the tubular outer part and comprises the outer part inner surface. At least one further layer, for example the second layer in a two-layer film, the third layer in a three-layer film, and so on, forms the outermost film layer of the outer part, comprising the outer peripheral surface of the outer part and thus the outer peripheral surface of the closure.

At least one layer can be defined as a weldable layer. A weldable layer is defined herein as a layer consisting of or comprising a material that can be welded. Welding is defined herein as an operation consisting in joining, by melting, two materials having the same nature or that are miscible in the melt state, said miscibility being manifested by the diffusion and interpenetration of the molecular chains, then cooling said materials in order to freeze the state of molecular interpenetration. If one or more weldable layers are provided, then this or these can be any one layer (for example, at least the first layer, or at least the second layer, or at least the third layer, or at least the outermost layer, or at least one internal layer lying between two further layers), or can be a combination of layers (for example, at least the first layer and the outermost (last) layer, or the first layer and one or more internal layers, or the outermost layer and one or more internal layers, or the first layer, the outermost layer, and one or more internal layers). According to preferred aspects, the first layer is a weldable layer, or the first layer and the outermost layer are weldable layers. It can be advantageous for at least one film to be a weldable layer if the closure outer part comprises a longitudinal join, in particular a welded join. According to an aspect of closure according to the present disclosure, if the closure outer part comprises a welded join, at least the first layer is weldable, for example only the first layer, or the first layer and one or more further layers, for example the first layer and the last layer, or the first layer and one or more internal layers.

At least one layer can be defined as a functional layer, if it provides one or more functions such as printability, strength, barrier properties, dead-fold, elongation, and/or other desirable properties for a closure as described herein. A functional layer may also be weldable, or may be non-weldable, or non-weldable at the welding temperature of a weldable layer. An example would be where the functional layer is only weldable at a higher temperature than a weldable layer, such that no or substantially no welding of the functional layer occurs upon welding the weldable layer. Any one or more layers can be a functional layer, for example, the first layer, a second layer, optionally a third layer or a fourth layer, the outermost layer, or any combination of two or more thereof.

According to an aspect of the closure according to the present disclosure, at least one layer comprises at least one outer part plastic material P. The term "plastic material" is used interchangeably herein with the terms "polymer", "copolymer", and the like. The plastic materials P used in closures disclosed herein may be synthetic, natural, or nature-derived, recyclable or non-recyclable, biodegradable or non-biodegradable, according to the generally understood definitions of these terms. Suitable outer part plastic materials P are those which can be formed into a film or laminate, whereby thermoplastic plastic materials are preferred. Exemplary plastic materials can be selected from the group consisting of polyolefins, olefin block copolymers, polylactic acid, polylactic acid derivatives, polyurethanes, polyesters, copolyesters, polyamides, polystyrenes, styrene block copolymers, ethylene vinyl alcohol polymers, polyvinylidene chlorides, polyhydroxyalkanoates, blends of any two or more thereof, mixtures of any two or more thereof, or any other combination of two or more thereof.

At least one outer part plastic material P can be defined as a weldable plastic material Pw. Suitable weldable plastic materials Pw can be selected from the group consisting of weldable thermoplastic polymers, weldable thermoplastic copolymers, weldable thermoplastic block copolymers, and combinations of any two or more thereof. This aspect is preferred for a weldable layer, if at least one layer is a weldable layer. Preferred weldable materials that can be considered according to this aspect are polyolefins or are based on polyolefins, such as polyethylenes, polyethylene block copolymers, polypropylenes, polypropylene block copolymers, polylactic acid, polylactic acid derivatives, and polyhydroxyalkanoates. In some aspects, low-density polyethylenes (LDPE) have been found to be particularly advantageous. Combinations of weldable plastic materials Pw are also possible, such as, for example, combinations of low density polyethylenes, low density polypropylenes, or mixtures or blends thereof, for example a blend of linear LDPE and radical LDPE, for example a blend of 80% linear LDPE and 20% radical LDPE. Biodegradable polymers such as polylactic acid, polylactic acid derivatives may also be used alone or in combination with polyolefins or olefin block copolymers, for example replacing one or more polyolefins in a mixture or blend.

At least one outer part plastic material P can be defined as a non-weldable plastic material Pnw. The term "non-weldable" is as defined herein, in particular meaning not weldable, or only weldable at a temperature at least 10 °C higher, particularly at least 20 °C higher than the welding or melting temperature of a weldable plastic material Pw where a weldable layer is present. Suitable non-weldable plastic materials Pnw can be selected from the group consisting of polypropylenes (PP), polyethylene terephthalates (PET), polyamides (PA), polystyrenes (PS), ethylene vinyl alcohol polymers (EVOH), polyvinylidene chlorides (PVDC). Preferred non-weldable plastic materials Pnw are, for example, uniaxially or biaxially-oriented PP, PET, PA or PS layers or films with barrier properties, for example PET with deposition of a SiOx, PVDC, EVOH or PA coating. A layer comprising a non-weldable plastic material Pnw can be defined as a functional layer if it provides a function as described herein.

The at least one layer comprising at least one outer part plastic material P can be one or more of the first layer, the second layer, a third layer or one or more further layers, for example the outermost layer. In one aspect, the first layer comprises at least one outer part plastic material P. In another aspect, the second layer comprises at least one outer part plastic material P. In another aspect, a third layer comprises at least one outer part plastic material P. In another aspect, the first and third layers, for example the first and third layers of a three-layer film, comprise at least one outer part plastic material P. In another aspect, all layers can comprise at least one outer part plastic material P. If more than one layer comprises an outer part plastic material P, the plastic material P can be the same or different in each respective P layer. If two or more mutually adjacent layers comprise an outer part plastic material P, or if all layers comprise an outer part plastic material P, the plastic material P can be the same or different in each layer but is preferably different in the mutually adjacent layers.

At least one layer of the film can comprise one or more non-plastic materials M, for example one or more metals. A layer comprising one or more non-plastic materials M, for example one or more metals, can be one or more of the first layer, the second layer, a third layer, or one or more further layers, for example the outermost layer. In one aspect, the first layer comprises non-plastic material M, for example one or more metals. In another aspect, the second layer comprises non-plastic material M, for example one or more metals. In another aspect, a third layer comprises non-plastic material M, for example one or more metals. In another aspect, the first and third layers, for example the first and third layers of a three-layer film, comprise at least one non-plastic material M, for example at least one metal. If more than one layer comprises at least one non-plastic material M, for example at least one metal, the at least one non-plastic material M, for example the at least one metal, can be the same or different in each layer. The remaining layer or layers can be plastic materials P. Preferred non-plastic materials M, for example preferred metals are selected from aluminum, aluminum alloys, tin, tin alloys. A layer comprising a non-plastic material M can be defined as a functional layer if it provides a function as described herein. For example, a metal layer can be a barrier layer, and/or provide strength, dead-fold, or other functional properties.

According to an aspect wherein the film is a bilayer film comprising two layers, these layers may be defined using the shorthand "first layer/second layer", as P/M, M/P, or P/P, wherein in each respective "P" layer P may mean Pw or Pnw. According to an aspect wherein the film is a trilayer film comprising three layers, these layers may be defined using the shorthand "first layer/second layer/third layer", as P/M/P, M/P/M, P/P/P, P/P/M or M/P/P, wherein in each respective "P" layer P may mean Pw or Pnw as defined herein.

According to an aspect of the closure according to the present disclosure, the film comprises two layers, a first, weldable layer, for example comprising at least one plastic material Pw, for example a polyolefin layer as described herein, or a layer comprising a polylactic acid or a polylactic acid derivative, or a combination of two or more polyolefins, or a combination of one or more polyolefins and a polylactic acid or polylactic acid derivative; and a second, outer layer, for example a functional layer as defined herein, comprising one or more selected from at least one polymer, for example a non-weldable plastic material Pnw, and at least one non-plastic material M, in particular a metal, such as an aluminum layer. This aspect can also be referred to as a weldable layer/functional layer" film, or as "weldable layer/non-weldable layer" film, comprising, for example polyolefin/Al films or PLA/A1 films. This aspect allows formation of a welded join, such as a butt-welded join, or an overlap bonded join, such as an overlap adhesive join. An example of this aspect includes, as first layer, one or more weldable and/or bondable polyethylenes, in particular any type of polyethylene or combination of polyethylenes as defined herein, in particular comprising one or more low density polyethylenes (LDPE); and as second layer aluminum. This example can be referred to as a "PE/A1" film. Further examples of this aspect include, but are not limited to, as first layer one or more weldable and/or bondable polypropylenes, in particular any type of polypropylene or combination of polypropylenes as defined herein for a weldable layer, and as second layer aluminum. This example can also be referred to as a "PP/A1" film. Further examples of this aspect include, but are not limited to, as first layer one or more weldable and/or bondable polylactic acids or polylactic acid derivatives as defined herein, and as second layer aluminum. This example can also be referred to as a "PLA/A1" film. In further examples, the first layer comprises a combination of one or more selected from polyethylenes, polypropylenes, polylactic acid and polylactic acid derivatives, as defined herein for Pw or for a weldable layer, and the second layer is as defined herein for a non-weldable Pnw or M layer, for example aluminum. PE/A1 films, in particular LDPE/A1 films, have been found to be advantageous according to this aspect for achieving the objects of the invention.

According to another aspect, the film comprises three layers, a first, weldable layer, for example comprising at least one plastic material Pw, for example a polyolefin layer as described herein, a second, functional layer, for example comprising at least one plastic material Pnw or non-plastic material M, for example an aluminum layer, and a third, outer, weldable layer, for example comprising at least one plastic material Pw, for example a polyolefin layer as described herein. This aspect allows formation of a welded join or a bonded join or a combination thereof, for example an overlap-welded join, an overlap-adhesive join, or a butt-welded join. Examples of these weldable layer/functional layer/weldable layer films are polyolefin/Al/polyolefin films, for example PE/A1/PE films, PE/A1/PP films, PP/A1/PE films, PP/A1/PP films.

If the closure outer part comprises a longitudinal adhesive join, for example a longitudinal overlap adhesive join, bilayer or trilayer films as disclosed herein can be used, whereby films of the type M/P/M, for example A1/P/A1, can be advantageous. According to another aspect, therefore, the film comprises three layers, a first, non-weldable and/or functional layer as described herein, for example comprising at least one plastic material Pnw and/or at least one non-plastic material M, for example an aluminum layer; a second layer, formed from or comprising one or more plastic materials P, which can be Pw or Pnw, preferably Pw, for example one or more polyolefins as defined herein, and a third, non-weldable layer as described for the first layer of this aspect, for example an aluminum layer. Examples of this aspect include A1/PE/A1 films, wherein PE is any one or more polyethylenes as defined herein, for example one or more LDPEs; A1/PP/A1 films, wherein PP is any one or more polypropylenes as defined herein; A1/PLA/A1 films, wherein PLA is any one or more selected from polylactic acid and polylactic acid derivatives as defined herein.

In any of these exemplary aspects, aluminum can be replaced or partially replaced by another suitable metal as defined herein for functional layers, such as tin, or by a suitable plastic material, for example a plastic material Pnw, as defined herein for functional layers. However, aluminum is preferred for its combination of properties, including, for example, low weight, suitability for food uses, recyclability, processability, flexibility, barrier properties and appearance, including ease of modification of appearance. Polyolefins may be replaced or partially replaced in any one or more of the respective layers by biodegradable polymers, such as PLA and/or PBAT.

The film can be defined as a laminate, for example defined as a bilayer laminate or as a multilayer laminate. The film layers are continuous and preferably attached to each other over substantially their entire respective surface, substantially without unattached areas and/or areas where one layer is absent. The attachment may be by means of additional adhesive means, such as suitable adhesives, primers, varnishes, and the like, which may be activated at ambient temperature or by means of heating or pressure or both. Alternatively, the attachment may be absent any additional means of adhesion other than the layers themselves. For example, one or more of the layers themselves may provide sufficient adhesion, with or without heating, to attach to a further layer or layers. If additional adhesive means are present in order to attach the layers to each other, then the adhesive means are not considered herein as further film layers unless otherwise stated. The film may be prepared by any means known to the skilled person and appearing suitable for preparation of a film or laminate as described herein. For example, the film layers may each be formed respectively as a coating or as a film, for example by means of deposition, extrusion, or any combination of methods suitable for forming a layer or laminate structure. It is also possible to manufacture the film as an extruded tube, in particular in a continuous extrusion process, for example by extrusion of one or more layers, for example one or more polymer layers, onto a preformed tubular polymer or metal layer, or onto a preformed tubular laminate, or by co-extrusion of at least two layers, or of at least three layers, or of all layers, in a tubular form. The details and examples of layers and structures as described herein also apply to a film or laminate extruded in tubular form.

According to an aspect of the closure, the outer part comprises at least one longitudinal join. This aspect has the advantages of allowing continuous manufacture of a robust outer part with an invisible or almost invisible join, with very little wastage or recycling of materials, and in particular ease of decorating the outer part by decorating a flat sheet of the film before forming the outer part by wrapping or rolling, and joining.

According to the aspect of the present disclosure whereby the outer part comprises at least one longitudinal join, the longitudinal join is formed during the formation of the outer part. The outer part can be formed according to this aspect by cutting a portion of a substantially planar film to a blank having an appropriate size and shape, depending on the desired closure size, or providing a continuous length of a film, wrapping or rolling the film around a form, for example a mandrel, to form a tubular form, such that at least two mutually opposing ends of the film abut each other along at least a portion thereof, or overlap each other along at least a portion thereof, or abut each other along at least a portion and overlap each other along a different portion, and forming a join in the region of the abutting ends or the overlapping ends or both respectively. The abutting and/or overlapping portions preferably extend over substantially the entire longitudinal length of the film. The join fixes the two mutually opposing film ends to each other along at least a portion thereof, preferably along the entire length thereof, preferably continuously, and causes the wrapped or rolled film to remain in the desired tubular shape after removal from the form. The term "longitudinal join" is intended to mean a join extending from one open end of the tubular form to the other open end, either along a substantially straight path that is substantially parallel to the longitudinal axis of the tubular form, or along a spiral path around the tubular form. A substantially straight path is preferred, for example for ease of formation of the join. The longitudinal axis is the axis extending along or parallel to the length of the tubular form.

According to an aspect of the closure in which the outer part comprises at least one longitudinal join, at least a portion of the longitudinal join is or comprises a welded join. A welded join is formed by heating the overlapping or abutting film ends at the respective portion or portions to be welded, at a temperature such that the weldable parts thereof melt and interpenetrate each other, followed by cooling in order to freeze the interpenetration such that the respective portions of the film ends are joined together. Any type of welded join known to the skilled person and considered suitable can be envisaged, including overlap welded joins and butt-welded joins. Overlap-welded joins are formed along overlapping portions of film ends and can be strong, as relatively larger areas of film are joined. However, overlap joins can have a noticeable overthickness in the region of the join, in particular where multilayer films are joined. If overlap welded joins are employed, it can be preferred for the film to include at least two weldable layers, arranged as the external faces of the film, such that a functional layer, for example an aluminum layer, is sandwiched between the two weldable layers. In this way, a strong welded overlap join can be obtained. Butt-welded joins are formed along abutting film ends and have the advantage that they do not result in a thicker, overlapping join area. A butt-welded join can thus be made invisible or almost invisible, while maintaining strength of the join. This improves the aesthetics of the closure. According to a preferred aspect, at least a portion of the longitudinal join is or comprises a butt-welded join. It is also possible that additional material is added to form the join in a butt-weld or overlap-weld configuration, for example a polymer material that is added to increase the amount of material available for welding. This polymer material can be any plastic material known to and appearing suitable to the skilled person for this purpose, and/or may be selected from plastic materials Pw as defined herein. According to an aspect of the closure according to the present disclosure, if the closure outer part comprises a welded join, at least the first layer is weldable and at least one further layer, for example the second layer in a bilayer film, or one or both of the second and third layers in a trilayer film, is not weldable, or is not weldable at the same temperature as the first layer, or is only weldable at a higher temperature than the first layer. Exemplary films are those disclosed herein as being suitable for forming a welded join.

According to a preferred aspect of an outer part comprising a longitudinal welded join, at least the first layer of the film is weldable. The first layer is preferably the inner layer, which forms the inner surface of the closure outer part. In this way the hygienic properties and the tightness to liquids of the inside of the outer part and of the join can be achieved. One or more further films, adjacent or not adjacent to the first film layer, can be weldable in addition to, or instead of, the first layer. One or more additional weldable layers can be advantageous, for example, if the join should be further strengthened. The functional layer can be weldable, or can be non-weldable, or can be in principle weldable, but not weldable at the same temperature as the first layer of the film, for example is weldable at a higher temperature than the first layer of the film. According to a particular aspect, the first layer can comprise a material having a first layer melting point, the at least one further layer can comprise a material having a further layer melting point, and the difference between the first layer melting point and the second layer melting point is at least 20°C.

According to another aspect of the closure in which the outer part comprises at least one longitudinal join, at least a portion of the longitudinal join is or comprises an adhesive join. An adhesive join can be an overlap join or an abutting join. Overlap adhesive joins can be made stronger due to the relatively larger areas of film joined together. Any adhesive known to the skilled person and appearing suitable for this purpose can be considered. Adhesives that are suitable for food applications are preferred. Exemplary films are those disclosed herein as being suitable for forming an adhesive join.

According to another aspect, the longitudinal join can comprise any one or more of at least one welded portion, at least one adhesive portion, and at least one portion comprising adhesive bonding and welding.

The film comprising at least a first layer and at least one further layer preferably has a thickness in the range of from about 100 µm to about 600 µm, more particularly a thickness in the range of from about 100 µm to about 550 µm, more particularly a thickness in the range of from about 100 µm to about 500 µm, yet more particularly a thickness in the range of from about 100 µm to about 450 µm, yet more particularly a thickness in the range of from about 150 µm to about 400 µm, yet more particularly a thickness in the range of from about 200 µm to about 400 µm, and yet more particularly a thickness in the range of from about 200 µm to about 350 µm. The thicknesses of the individual film layers are selected so that the overall thickness of the film is within one of these ranges. The thickness of the film is generally less than the thickness of a metal screw cap. This is advantageous as it reduces considerably the amount of material used in the closure, in turn reducing the weight and the environmental footprint of the closure, while maintaining strength and function of the closure.

A layer comprising at least one plastic material P preferably has a thickness in the range of from about 20 µm to about 300 µm, more particularly a thickness in the range of from about 20 µm to about 280 µm, more particularly a thickness in the range of from about 20 µm to about 260 µm, yet more particularly a thickness in the range of from about 20 µm to about 250 µm, yet more particularly a thickness in the range of from about 20 µm to about 240 µm, yet more particularly a thickness in the range of from about 20 µm to about 230 µm, yet more particularly a thickness in the range of from about 20 µm to about 220 µm, more particularly a thickness in the range of from about 30 µm to about 220 µm, and more particularly a thickness in the range of from about 30 µm to about 210 µm. If the film comprises three or more layers, and more than one P layer is present, then the sum of the respective thicknesses of the P layers is preferably in the ranges disclosed for the P layer, where the plastic material P can be selected from weldable plastic materials Pw and non-weldable plastic materials Pnw. In a bilayer film, if the first layer is a weldable layer comprising a plastic material Pw, for example the PE layer in a PE/A1 film, then the thickness of the first layer can be selected in order to provide a sufficient quantity of weldable material to ensure a strong welded join. If the film comprises three or more layers, and more than one weldable layer is present, then the sum of the respective thicknesses of the weldable layers is preferably in the ranges disclosed for the first film layer. Other factors to be considered when selecting layer thicknesses and overall film thickness are, for example, the strength, formability, deformability, elongation capacity, and processability of the film, which should make the film suitable for use as a closure outer part.

The at least one further layer of a bilayer film, for example a Pnw layer or an M layer, preferably has a thickness in the range of from about 4 µm to about 100 µm, more particularly a thickness in the range of from about 4 µm to about 90 µm, more particularly a thickness in the range of from about 4 µm to about 80 µm, yet more particularly a thickness in the range of from about 4 µm to about 70 µm, yet more particularly a thickness in the range of from about 4 µm to about 60 µm, yet more particularly a thickness in the range of from about 4 µm to about 50 um, and yet more particularly a thickness in the range of from about 4 µm to about 45 µm. If the at least one further layer is a functional metal layer, for example an aluminum layer, for example in a PE/A1 film, then the at least one further layer preferably has a thickness in the range of from about 4 µm to about 50 µm, more particularly a thickness in the range of from about 4 µm to about 45 µm, more particularly a thickness in the range of from about 4 µm to about 40 µm, yet more particularly a thickness in the range of from about 4 µm to about 35 µm, yet more particularly a thickness in the range of from about 4 µm to about 30 µm, yet more particularly a thickness in the range of from about 4 µm to about 25 µm, yet more particularly a thickness in the range of from about 4 µm to about 20 µm, yet more particularly a thickness in the range of from about 4 µm to about 15 µm, and yet more particularly a thickness in the range of from about 4 µm to about 10 µm. If the film comprises three or more layers, and more than one further layer is present, for example more than one functional layer, then the respective thicknesses of the further layers, or the sum thereof, are preferably in the ranges disclosed for the at least one further film layer. The thickness of this layer or of these layers is less than the thickness necessary for a metal screw cap. Where this layer is a metal layer or comprises a metal layer, such as an aluminum layer, this is particularly advantageous as it reduces considerably the amount of metal used in the closure while retaining or even improving strength, structure and function of the closure.

According to the aspect wherein the outer part comprises a longitudinal join, the film has mutually opposing film ends and the longitudinal join is in the region of the film ends. The film ends can also be referred to as film edges. The first layer of the film has first layer ends and the at least one further layer of the film has further layer ends. The film ends can be cut straight, that is, substantially perpendicular to the plane of the film. In another aspect, the film ends can be cut oblique, or slanted, that is, at an angle other than 90° to the plane of the film. In an aspect of the present disclosure wherein the join is a butt-welded join, oblique film ends can be advantageous in strengthening the join, for example by providing a larger surface for bonding and thus a larger welded area. According to one aspect of the closure wherein the outer part comprises a longitudinal join, the first layer of the film has first layer ends that are butt-welded and the at least one further layer of the film has further layer ends, and any butt-welding of at least one further layer end, in particular of the further layer ends, is non-existent butt-welding. The term "non-existent butt-welding" with respect to a further layer is intended to mean that very little or substantially no welded join is formed between the material of the further layer at the abutting ends thereof. This can be achieved, for example, by having a weldable first layer, and at least one further layer that is not weldable, or is not weldable at the same temperature as the first layer of the film. This is achievable, for example, where the first layer comprises a material having a first layer melting point, the at least one further layer comprises a material having a further layer melting point, and the difference between the first layer melting point and the further (e.g., second) layer melting point is at least 20°C. In this way the film can be heated to a suitable temperature in order to achieve welding of the weldable layer, without reaching a temperature at which welding of a non-weldable layer could be achieved.

In an aspect of the closure disclosed herein, the film first layer can be the outermost layer of the outer part, or it can be the innermost layer of the outer part. According to a preferred aspect, the film first layer is an inner layer comprising the outer part inner surface and at least one further film layer is an outer layer comprising the outer part outer surface.

According to the aspect where the closure outer part comprises a longitudinal join, additional material can be added to the join at one or both faces of the film, in order to strengthen the join. For example, the closure outer part can comprise at least one strip, wherein the at least one strip covers at least a portion of the film ends, i.e. at least a portion of the join. The strip can have a thickness that is smaller than, substantially the same as, or greater than the thickness of the film comprising at least a first layer and at least one further layer. According to a preferred aspect, in particular where the strip is on the outer surface of the closure outer part, the strip has a thickness that is smaller than the thickness of the film comprising at least a first layer and at least one further layer. This reduces the visibility of the strip as well as making is less likely that an end consumer can feel the strip. The strip has a length and a width, in addition to having a thickness. One or more strips may be preferred, for example if the join is a butt-welded join and only one layer, particularly the first layer, is weldable, as the strip can improve the strength of the join. In this case the strip would preferably be located on the outer surface of the outer part, covering the non-welded side of the join. The thickness of the strip can be, for example, in the range of from about 10 µm to about 60 µm, particularly in the range of from about 10 µm to about 55 µm, particularly in the range of from about 10 µm to about 50 µm, particularly in the range of from about 15 µm to about 50 µm, and more particularly in the range of from about 15 µm to about 45 µm. These thicknesses are preferred for strips on the outer surface of the outer part. Strips on the inner surface of the outer part can be slightly thicker, for example in the range of from about 10 µm to about 80 µm, but preferably have thicknesses in the same range as outer strips. If present, the at least one strip covers at least a portion of the film ends, in particular at least a portion of the join, preferably at least a portion of the butt-welded join, or a portion of the adhesive join, or both. According to an aspect of the disclosure, the strip is a longitudinal element that is attached to the outer part and extends in the longitudinal direction of the outer part, preferably along substantially the entire longitudinal extent of the outer part. The length of the strip can thus be, and preferably is, substantially the same as the length of the closure outer part. According to this aspect, the at least one strip preferably covers the film ends, in particular covers substantially the entire join on one face thereof, preferably substantially the entire butt-welded join on one face thereof, or substantially the entire adhesive join on one face thereof. It is also possible that two strips are comprised, one on each face of the join or a portion thereof. Thus, for example, at least one strip can be attached to the outer part outer surface; or at least one strip can be attached to the inner part inner surface; or at least one strip can be attached to the outer part outer surface and at least one further strip is attached to the inner part inner surface. The strip can be bonded or welded onto the surface of the film, at ambient temperature or at elevated temperature. Adhesive bonding can be by means of an adhesive applied to either the film or the strip at the time of bonding, or an adhesive can be pre-applied to the film or to the strip, or by means of heat bonding and/or pressure bonding. Two-component adhesives can also be used.

The width of the strip is generally smaller than the length. The strip can have a width, for example, in the range of from about 1 mm to about 1 cm, preferably less than 1 cm, for example, about 9 mm, about 8 mm, about 7 mm, about 6 mm, about 5 mm, about 4 mm, about 3 mm, about 2 mm, or about 1 mm.

The strip can comprise any one or more selected from the group consisting of plastic materials, metals, and any combination, mixture, or blend thereof. The strip can comprise two or more layers in laminate form, the material of each layer being selected from the group consisting of one or more plastic materials, in particular one or more outer part plastic materials P, for example one or more weldable outer part plastic materials Pw, and one or more metals, and any combination thereof. At least one strip can impart dead-fold properties to the outer part, if dead-fold properties are desired. The strip is preferably transparent. The strip may be printed or otherwise decorated, for example so that the closure has as uniform an appearance as possible. In addition to, or instead of, a strip, it is conceivable that the closure comprises one or more layers covering one or both faces of the join. If a strip is present on one or both faces of the join, one or more layers covering at least a part of the outer layer and the strip, in particular covering the outer layer and the strip, can be comprised, for example in order to further improve strength of the join, or for aesthetic reasons, for example to reduce visibility of the join and/or of the strip. Any further layer is preferably decorated or transparent, in order to achieve aesthetic unity with the closure.

The outer part of the closure disclosed herein comprises at least a straight skirt. In most cases, the outer part is tubular and the skirt corresponds to the tube. The tube, and thus the skirt, can be substantially cylindrical, or tapered, whereby a tapered outer part is generally substantially cylindrical in the region of the inner part, in particular where the inner part and the outer part are fixed together, and tapered outwards in the remaining region of the outer part, as disclosed herein. The outer part can optionally also comprise an outer part head, covering the inner part head. A cap can additionally or alternatively be applied to the outer head or upper surface of the outer part and/or the inner part, to form a head that covers the inner part head. This might be aesthetically advantageous, for example, if it allows an appearance similar to a traditional wine bottle capsule.

The outer part can form an outer rotation surface which is of a constant radius. This is particularly preferred at least in the region of the outer part that covers the skirt of the inner part, where no external threads are present on the outer part.

The inner part, which may also be referred to as an insert, sits inside and is fixed to the outer part, to form the closure. The inner surface of the inner part faces inwards towards the container and the interior of the container. The inner part is responsible *inter alia* for forming a tight seal at the interface between the closure and the container or receptacle, such that liquid cannot escape when the bottle is closed or re-closed with the closure. Oxygen ingress can also be controlled, for example reduced or prevented. The form and type of the inner part is not especially limited. Some suitable types and forms of inner parts, or inserts, are known to the skilled person. The inner part comprises a skirt and a head, or top. The inner surface of the inner part skirt is threaded to cooperate with the thread finish on the neck of the bottle. The inner surface of the inner part head faces towards the interior of the container. The inner part head can comprise additional sealing means on its inner surface. The additional sealing means may also be referred to as a liner. The head inner surface, and/or a liner if incorporated, can be at least partially in contact with the interior and optionally also with the contents of the container. The inner part head can form a seal with the rim of the bottle neck, for example by means of tight contact with the rim of the bottle neck. If additional sealing means are comprised in the inner part head, the additional sealing means form a seal with the rim of the bottle neck, for example by means of tight contact with the rim of the bottle neck, held in place by the inner part head when screwed onto the bottle to close the bottle.

The inner part outer surface faces outwards, away from the container, and broadly comprises two regions, defined as the outer surface of the inner part skirt, or the outer peripheral surface, and the outer surface of the inner part head. The outer surface of the inner part faces towards the inner surface of the closure outer part and interacts with at least a portion thereof in order to fix the inner part and the outer part to each other. The fixing can be by any means known and appearing suitable to the skilled person, for example as described herein, for example by means of an interference fit, by means of welding, or by means of an adhesive, or any combination thereof.

The inner part comprises at least one inner part plastic material. The term "plastic material" as used herein is intended to comprise all types of recyclable, non-recyclable, biodegradable and non-biodegradable polymers and copolymers, including block copolymers, unless otherwise stated. The at least one inner part plastic material can be any plastic material known to the skilled person and appearing suitable for use as an inner part or insert for a closure for use in food packaging. The inner part plastic material can be the same as the outer part plastic material P or can be different. It can be advantageous if the inner part plastic material is the same as the outer part plastic material P, or if the inner part plastic material and the outer part plastic material P have similar melting points, if it is intended to fix the inner part and the outer part together by means of welding. The at least one inner part plastic material preferably has mechanical properties similar or equal to at least the properties of PE at 25 °C, and can include filler, for example mineral filler, in amounts up to 50% by weight of the combined amount of inner part plastic material and filler. The inner part will generally be moulded or thermoformed, such as, for example, an injection-moulded plastic part, a compression-moulded plastic part, an extruded plastic part, a coextruded plastic part, a vacuum-formed plastic part, a blow-molded plastic part, a deep-drawn plastic part or the like. The at least one inner part plastic material is preferably selected from the group consisting of polymers and copolymers that can be formed by means of moulding, extrusion, deep drawing, vacuum-forming, or the like, in particular by moulding processes, whereby in one aspect compression moulding or injection moulding is preferred. The plastic material should also be suitable for, in particular approved for use in food packaging, in particular according to the relevant legislation or guidelines, as it may come into contact with the contents of the receptacle. The at least one inner part plastic material is selected in particular from the group consisting of thermoplastic polymers, thermoplastic copolymers, thermoplastic elastomers, and thermosetting polymers, thermosetting copolymers, any or all of which may be recyclable, non-recyclable, biodegradable or non-biodegradable. The closure inner part preferably comprises one or more thermoplastic polymers selected from the group consisting of polyolefins, block copolymers, thermoplastic polyurethanes, thermoplastic vulcanisates, thermoplastic polyesters, thermoplastic copolyesters, thermoplastic polyamides, polystyrene, styrene block copolymers, polylactic acid, polybutyrate adipate terephthalate (PBAT), polyhydroxyalkanoates, blends of any one or more thereof, mixtures of any one or more thereof, or any other combination of one or more thereof. The plastic material may be crosslinked. Examples of suitable polyolefins are polyethylene, polypropylene, polybutylene, each or any of which may be, for example, low density, medium density, high density, for example LDPE, HDPE. Polyethylene terephthalate and polybutylene terephthalate are exemplary copolyesters. Further examples are styrene block copolymers, for example styrene ethylene butadiene block copolymers, ethylene vinyl acetate, polylactic acid, polybutyrate adipate terephthalate (PBAT), and the like. Polystyrene, for example high impact polystyrene, can also be used. The at least one inner part plastic material can be one plastic material, or can comprise combinations of any one or more of the plastic materials mentioned herein with each other or with other plastic materials, for example blends or mixtures thereof.

The additional sealing means, or liner, if present, can be in the form of a circular ring of material that is affixed to the inner surface of the inner part head and forms a tight contact with the rim of the bottle neck when the bottle is closed using the closure. In another aspect, the sealing means can be in the form of a circular disc that covers substantially the entire inner surface of the inner part head and forms a tight contact with the rim of the bottle when the bottle is closed with the closure. If a liner is incorporated into the closure, the liner can be at least partially in contact with the interior and optionally also with the contents of the container, for example if the liner is disc-shaped. The additional sealing means can extend into the bottle neck, for example as in the case of a liner with an oxygen reservoir and means for providing oxygen from the liner reservoir to the interior of the bottle, such as a suitable membrane.

The sealing means may be made from a polymer material. Suitable sealing means or liners are known to the skilled person. Exemplary commercially available liners such as Saran liners, Saranex liners, Saran-tin liners or Stelvin liners may form the sealing means. These liners generally combine multiple layers selected from the group consisting of polymer materials such as polyethylene, polyvinylidene chloride (PVDC) and laminates thereof, Saran film, metal foil and wadding material such as foamed polymer material or fiber card (paper), and biodegradable polymers such as polylactates and/or polylactate derivatives. A liner may include one or more selected from the group consisting of PVDC, Nylon, filled Nylon, EAA, EVOH, starch, cellulose, PET, PP, PE, EVA, PEO, styrene block copolymers, COC, polystyrene, polycarbonate, silicones, biodegradable polymers, for example polylactic acid (PLA), polymers based on polylactic acid, polymers based on polylactic acid derivatives, copolymers of any two or more of the above polymers' respective monomer units, block copolymers comprising one or more blocks of any two or more of the above polymers, and combinations of any two or more of the polymers, copolymers and block copolymers. According to a particular embodiment, a liner may include a deformable composite in which the layers are selected from the group consisting of monolayers or combinations of PVDC, Nylon, filled Nylon, EAA, EVOH, starch, cellulose, PET, PP, PE, EVA, PEO, styrene block copolymers, COC, polystyrene, polycarbonate, polylactic acid, polymers and/or copolymers based on polylactic acid, polymers and/or copolymers based on polylactic acid derivatives, silicone, and copolymers of the above polymers.

The sealing means may provide for a substantially liquid and/or gas tight, hermetic seal at the interface between the container (e.g., wine bottle) and the closure. This may be achieved, for example, if the sealing means, particularly a disc-shaped sealing means, include a barrier layer to prevent or reduce permeation of gases through the stopper. Such a barrier layer may, for example, be a metal film layer selected from the group consisting of an aluminum film layer and a tin film layer. Further possible barrier layers may comprise other gas-impermeable materials selected from the group consisting of glass, steel, polymeric materials, PVDC-laminates and the like and also combinations thereof. In particular, a barrier layer can comprise a material selected from the group consisting of tin and its alloys, aluminum and its alloys, steel and its alloys, glass, TPE, PVC, styrene block copolymers, EVOH, nylon, filled nylon, and combinations thereof. Liners with such barrier layers are known in the art as evidenced by US Patent No. 6,677,016 B2, in particular in respect of the disclosure therein pertaining to liners with barrier layers. The sealing means may comprise a single layer, or it may comprise two or more layers. The sealing means may comprise one or more polymers, and may comprise one or more foamed or unfoamed polymers.

During the bottling process oxygen can be trapped in the headspace between the bottle content and the closure. Dissolved oxygen in the container contents can also outgas into the headspace during storage. To reduce or eliminate the oxygen present in the headspace, for example to counteract the initially high oxygen concentration, which could lead to uncontrolled oxidation of the wine, a closure may comprise oxygen-scavenging agents. Such agents can be present in the sealing means, in particular in a disc-shaped sealing means. Said oxygen-scavenging agent can, for example, decrease the initially high oxygen concentration immediately after bottling, as well as during storage. In addition or alternatively thereto, at least one oxygen-releasing agent or at least one oxidant-releasing agent or at least one of each may be present in the closure, in particular in the sealing means. The terms "oxygen-releasing agent" and "oxidant-releasing agent" are used interchangeably herein. An oxygen-releasing agent or an oxidant-releasing agent or both, if present in the closure, in particular in the sealing means, could ensure a defined amount of oxygen to be consistently released into the container interior over a defined period of time. This has the advantage of avoiding reduction of the wine during long-term storage, which can occur due to a lack of oxygen ingress into the container, leading to undesirable effects on the flavor and bouquet of a wine.

One or more of an oxygen scavenging agent, an oxygen-releasing agent and an oxidant releasing agent may optionally be contained in an element of the closure selected from the group consisting of the inner part, in particular the inner part head, the sealing means, a layer separate to the sealing means and affixed within the inner part head, or a layer forming part of the sealing means within the inner part head. One or more oxygen scavenging agent may be contained in the same or in a different element of the closure than that containing one or more oxygen releasing agent or oxidant releasing agent. In the case of a multilayer sealing means, the oxidant releasing agent or the oxygen-scavenging agent or both are preferentially contained in one of the innermost elements or layers facing the interior of the product retaining container. They may be present in the same layer as each other, or in different layers. A thin polymer film or the like can be used to prevent one or both of the oxidant releasing agent and the oxygen-scavenging agent coming into direct contact with the bottle content.

Possible oxygen scavenger agents are selected from the group consisting of ascorbates, sulfites, EDTA, hydroquinone, tannins and the like, and their salts and precursors, and combinations thereof. In a preferred embodiment, the oxygen scavenger agent is selected from the group consisting of sodium ascorbate, sodium sulfite and potassium EDTA, iron or other metal based scavengers, and combinations thereof.

The oxidant releasing agent may be, for example, a chemical, a catalyst or an enzyme capable of releasing an oxidant into the interior of the product retaining container or receptacle. In a preferred embodiment, the oxidant releasing agent should satisfy common food safety regulations. According to the embodiments, the oxidant releasing agent may, for example, be selected from the group consisting of peroxides, superoxides, ozonides, chlorates, perchlorates, borates, perborates, percarbonates, perphosphates, perpyrophosphates, persilicates, persulfates, thiosulfates, peroxydisulfates, peroxy compounds, and their salts and precursors, and combinations thereof. Moreover, said oxidant releasing agent can be selected from the group consisting of inorganic, organic and polymeric compounds, and combinations thereof. In another embodiment said oxidant releasing agent is selected from the group consisting of superoxides and peroxides of alkali metals and alkaline earth metals, and combinations thereof. In another embodiment said oxidant releasing agent is selected from the group consisting of potassium superoxides and magnesium superoxides, and combinations thereof. Furthermore, said oxidant releasing agent may, for example, be selected from the group consisting of peroxycarboxylic acids and sulfone peroxycarboxylic acids, and combinations thereof. Possible further oxidant releasing agents can be inorganic or organic oxides and hydroxides such as for example magnesium hydroxide or magnesium oxide. Moreover, foamed material may constitute the oxidant releasing agent. The oxidant releasing agent can be selected from the group consisting of catalysts and enzymes catalyzing reaction releasing oxidant molecules, and combinations thereof. In particular, said catalysts or enzymes may generate oxidants by conversion of a precursor substance. Preferably, the released oxidant itself is selected from the group consisting of molecular oxygen, hydrogen peroxide and superoxide, and combinations thereof.

Screw cap closures have conventionally allowed extremely low oxygen ingress rates. The two types of screw cap liners currently most used in the wine industry are foil/PVDC laminates and PVDC laminates. Typically, a standard 30 mm diameter foil cap liner, when well sealed to a bottle, has an oxygen diffusion rate of approximately 0.0002 cc oxygen per 750 mL bottle per 24 hours. Typically, a well-sealed 30 mm PVDC cap liner has a diffusion rate of approximately 0.002 cc oxygen per 750 mL bottle per 24 hours. It is believed that the oxygen diffusion rate of top quality natural cork stoppers falls between that of the foil and PVDC liner containing screw cap closures. The amount and rate of oxygen delivered to a bottle closed with a screw cap can be adjusted, for example, depending on the seal or liner used, and/or on the presence of oxygen and/or oxidant releasing and/or scavenging agents. According to an aspect of the closures, the oxygen delivery can be customized, based on the oxygen requirements associated with the wine being closured. A winemaker bottling a white wine, for instance, may desire a screw cap closure with an oxygen release rate into the interior of the bottle of approximately 0.0005 cc per 750 mL bottle per day. Accordingly, the winemaker may select a screw cap closure made using the technology disclosed herein, having an oxygen release rate in the range of, for example, about 0.0004 to 0.0006 cc oxygen per screw cap closure per 24 hours. Similarly, a heavy red wine, which the winemaker wants to age in the bottle, will require more oxygen and could be capped with a closure having release rates in the range of, for example, about 0.0007 to 0.0015 cc oxygen per bottle per 24 hours. In a further embodiment oxygen release rates of the closure into the bottle interior can be 0.00005 - 0.002, 0.00005 - 0.001, 0.00005 - 0.0005, 0.00005 - 0.0002, 0.00005 - 0.0001, and 0.0001 - 0.002 cc oxygen or oxidant per 24h per 750 mL bottle. There may also be circumstances in which oxygen release rates higher than 0.002 cc oxygen per 750 mL bottle per 24 hours are desirable. Measurement of oxygen diffusion rates and headspace oxygen, also referred to as oxygen transfer rates, or OTR, is made under atmospheric conditions using Mocon technology according to ASTM F1307-02 (2007).

The inner part and the outer part can be fixed together by any means known to the skilled person and appearing suitable. The outer part and the inner part are preferably fixed to each other by attachment means comprising at least one selected from mechanical attachment means and chemical attachment means. By mechanical attachment means are meant, for example, interference means, for example an interference fit, or other means for improving cohesion between the outer part and the inner part, preventing or reducing the outer part slipping over the inner part when opening and closing the closure, such as one or more rough contact surfaces where the outer part and the inner part contact each other, or reducing the tightening clearance between the outer part and the inner part. By chemical attachment means are meant, for example, bonding means such as adhesive means, heat-bonding means, welding means, and the like. Adhesive means can be, for example, single component adhesives or two-component adhesives, where, for example, any adhesive known to the skilled person and appearing suitable may be used, including one or more selected from the group consisting of glues, varnishes, plastics, and the like, including adhesives activated by heat, by pressure, or by both heat and pressure, and any combination of two or more of the adhesives or types of adhesives mentioned herein. Heat-bonding means can include, for example, adhesives that melt upon application of heat and resolidify on cooling to bond components together. Welding is also possible. Another type of heat-bonding is also possible, where the inner part is formed *in situ* inside the outer part, for example by means of forming methods disclosed herein, for example by means of one or more moulding methods disclosed herein, such as, for example, compression moulding or injection moulding. If the inner part is formed *in situ,* the fixing means can comprise welding, for example if the materials of the inner part and the outer part innermost layer, for example the first layer, can be welded together. One or more adhesive means may also be employed in addition to welding or as an alternative to welding, if the inner part is formed *in situ,* for example by providing adhesive means on the inner surface of the outer part, for example heat-activated adhesive means, which can comprise, for example, glue, varnish, or plastic. Pressure-sensitive adhesives can also be used. Both mechanical and chemical attachment means can be present, or only one type of attachment means, either mechanical or chemical. The inner part and the outer part can be fixed together by any one means or by any combination of two or more of the means disclosed herein, or by any other means known to the skilled person and appearing suitable. The fixing means are preferably suitable for use in food applications.

The closure comprises decorations, such as one or more selected from colour, indices, embossing, and the like. The decorations are visible externally and can be located on the outer part outer surface. Decorations such as colour and indices can additionally or alternatively be located on one or more internal layers, rather than on the outermost layer, provided that the layer or layers lying further out than the decorated layer or layers are at least substantially transparent, preferably are transparent. It is preferred that the outer surface of the closure outer part comprises printed indices. According to the aspect where the closure outer part is formed from a flat laminate sheet, as in the aspects where the outer part comprises a longitudinal join, this enables a fast and efficient printing and decoration of the closure, for example by inline printing of the film that forms the outer part, prior to cutting and forming. According to the aspect where at least one layer of the closure outer part, preferably all layers of the closure outer part, is formed by extrusion into a tubular form, this enables printing and decoration of the tubular film after extrusion and before or after cutting into lengths suitable for the end use as a closure.

The closure, in particular the inner part, but also optionally the outer part, comprises pilfer-proof means (or at least one pilfer-proof element). Suitable pilfer-proof means are known to the skilled person and are not limited. According to exemplary pilfer-proof means, the inner part skirt comprises at least one bridge to a ring, at least one bridge being broken when the closure is opened for the first time, such that the inner part skirt is separated from the ring. The outer part comprises, for example, a circular line of weakness around the entire circumference thereof, which breaks upon first opening such that the outer part separates into two parts: a top part, attached to and covering the inner part, and a bottom part which is detached from the rest of the closure, but may be attached to the inner part ring that is separated upon first opening.

The outer part has a length L sufficient to hide, at least before the first opening of the closure, the inner part skirt and the inner part pilfer-proof means. If the closure is a wine bottle closure, the length L is preferably about the same as the length of a traditional wine bottle capsule, in order to provide the appearance of a traditional wine bottle capsule. The length L can easily be determined by the skilled person and will depend upon the desired appearance of the closure and the bottle closed with the closure, and on the size of the bottle, in particular the length of the bottle neck.

The present disclosure further provides for a method for manufacturing a closure for a container, in particular for a receptacle for beverages in the form of a bottle with a neck, the closure comprising at least an outer part and an inner part, the method comprising at least the following method steps:
A. providing the closure outer part
B. providing the closure inner part; and
C. affixing the closure inner part to the closure outer part.

According to the method of the present disclosure, the outer part comprises a film, whereby the film comprises at least a first layer and at least one further layer, and at least one layer comprises at least one outer part plastic material P.

According to one aspect of the method, step A comprises at least the following steps:
A1. providing a film comprising at least a first layer and at least one further layer, at least the first layer comprising at least one outer part plastic material P, wherein the film comprises at least two mutually opposing film ends;
A2. arranging the film with the at least two mutually opposing film ends substantially abutting each other along at least at least a portion thereof or substantially overlapping each other along at least at least a portion thereof; and
A3. forming a join along at least a portion of the at least two mutually opposing film ends to form a joined film.

The closure outer part is not formed by means of drawing, stamping, punching, or the like.

Prior to method step A, the outer part or the tubular film or the planar film is optionally provided with decoration, such as colour, indices, and the like, for example in a printing and/or decorating step. The method can thus further comprise a step of decorating the film, in particular decorating at least one layer of the film, in particular at least one further layer of the film, prior to method step A.

The film is arranged in method step A2 by wrapping around a form, for example a mandrel, in the desired tubular shape, for example substantially cylindrical, or tapered, or a combination thereof. The first layer of the film is preferably arranged as the inside layer, closest to the form. It is also possible to form first one type of tubular form, for example substantially cylindrical, and subsequently form this into a tapered form.

Method step A. can be carried out in a continuous operation, or it can be discontinuous, whereby a continuous method step A. is preferred for reasons of efficiency, speed, and reduction of waste.

If method step A. is carried out continuously, an optionally pre-decorated, continuous length of film, for example continuously distributed from a roll of film of a suitable film width, for example a ribbon of film, is wrapped continuously around a form to form a continuous tube shape, with the longitudinal edges of the film abutting or overlapping each other, and the join is formed continuously along the abutting or overlapping edges. The join can be formed by any means described herein, for example by welding or adhesive means. If additional material is added to either or both sides of the join, this can be added continuously substantially simultaneously with formation of the join, or immediately or shortly after the join is formed. The resulting continuous tube is cylindrical and is cut to a desired length in a further continuous method step after formation. After cutting the tube, the pre-formed inner part can be inserted into and fixed to the outer part, by any means known to the skilled person and appearing suitable, in particular by any means described herein, such as any one or more of interference means, welding, and adhesive means. Alternatively, the inner part can be formed *in situ* in the outer part, for example by means of injection moulding or compression moulding. If the inner part is formed *in situ,* the fixing means can comprise any one or more of interference means, welding, and adhesive means. If the inner part is formed *in situ* in an outer part having a weldable layer as first, innermost layer, for example, the fixing means can comprise welding. If the inner part is formed *in situ* in an outer part having a non-weldable layer as first, innermost layer, for example, the fixing means can comprise adhesive means, for example by application of adhesive to the inner surface of the outer part, in particular to the portion of the outer part inner surface that will be in contact with the inner part. A heat-activated adhesive can be used advantageously. Before, during or after the introduction and/or fixing of the inner part into the outer part, the outer part can be stretched or otherwise formed into a tapered shape. A suitable film for stretching into a tapered shape should be sufficiently flexible and/or stretchable to accommodate the tapering. After or during the introduction and/or fixing of the inner part into the outer part, an end cap can be applied, if desired. An optional end cap can be fixed to the head of the inner part, and optionally also to the top edge portion of the outer part, by any means known to the skilled person and appearing suitable, for example by means of welding or adhesive means, as described herein.

If method step A. is carried out discontinuously, the method according to the present disclosure can further comprise an optional cutting step, generally after an optional decoration step and before method step A., in which an optionally decorated film is cut to a suitable shape for forming the closure outer part. For example, the film can be cut to form a blank having a substantially rectangular shape, a substantially square shape, a substantially parallelogram shape, or a substantially trapezoid shape. Square, rectangular and parallelogram shapes are particularly suitable for forming a cylindrical outer part. To form a tapered outer part, the film can be cut to a trapezoid blank, or a cylindrical form outer part can be stretched or shaped into a tapered form. Suitable dimensions can be determined by the skilled person. In a discontinuous method step A., the wrapping and joining will generally be carried out multiple times in parallel.

The first layer of the outer part film has first layer ends and at least one further layer has further layer ends. The details regarding the film, the first layer, further layers, the first layer ends and further layer ends are as disclosed herein for the closure of the present disclosure.

The join formed in method step A3 is referred to as a longitudinal join, as defined herein with respect to the closures according to the present disclosure.

According to an aspect of the disclosure of the method herein, the join formed in method step A3 comprises at least one of a welded portion and an adhesive portion. In this aspect, the joining in method step A3 can be by means of welding or by means of adhesion, in particular adhesion with one or more adhesives, or by means of welding and adhesion with one or more adhesives.

If joining by welding is employed, the welding preferably occurs by means of application of heat to the portion to be welded. In this way the weldable portions of the film, in particular portions of one or more weldable layers, as disclosed herein, for example at least the first layer, can melt and interpenetrate each other in the heated area. Application of heat can be by any suitable heating means known to the skilled person. Substantially at the same time as applying heat, or immediately or shortly thereafter, provided that the weldable portions of the film are still in a sufficiently molten state to allow them to be sealed together, sealing pressure can be applied along the region of the welded join in order to form the join. Once the join is formed, the region of the join can be subsequently cooled, for example by means of a cooling medium such as air or any other suitable cooling medium, which can be applied, for example, by blowing means outside the tubular form, or by means of cooling channels in the mandrel or form around which the tube has been formed. Suitable methods and equipment for application of heat, application of pressure, and cooling, are any methods and equipment known to the skilled person and appearing suitable.

According to an aspect of the presently disclosed method, the longitudinal join is a welded join. In this aspect, the welded join preferably extends along substantially the entire longitudinal extent of the closure outer part, preferably substantially without unjoined portions.

In a preferred aspect of a welded join, the welded join is a butt-welded join.

The details regarding joins, welded joins, butt-welded joins, and adhesive joins, are as disclosed herein for the closure of the present disclosure.

If the join is a butt-welded join, in step A2 the film ends are arranged abutting and in step A3 the abutting film ends are joined by butt-welding, preferably by successively heating and cooling. According to an aspect of the present disclosure, the first layer ends are butt-welded and any butt-welding of at least one further layer end is non-existent butt-welding, as defined herein.

It is also possible that the longitudinal join is an adhesive join. Suitable adhesives for forming an adhesive join are known to the skilled person, for example those mentioned herein with respect to the join in the closure outer part. Pressure can be applied along the region of the adhesive join in order to form a seal.

The longitudinal join can be an overlapping join. To form an overlapping join, the layer ends are arranged with one end overlapping another end. For example, an adhesive join is preferably an overlapping join. An overlapping join can be a welded join, for example if a weldable layer is present on both faces of the film, that is, if the first layer, arranged to be on the inside of the tubular form, is weldable and a further layer, on the outside of the tubular film, is also weldable, in particular weldable with the first layer. The film ends can overlap by an amount in a range of from about 1 mm to about 10 mm, particularly in a range of from about 1 mm to about 9 mm, particularly in a range of from about 1 mm to about 8 mm, particularly in a range of from about 1 mm to about 7 mm, particularly in a range of from about 1 mm to about 6 mm, particularly in a range of from about 1 mm to about 5 mm, or particularly in a range of from about 2 mm to about 5 mm.

The method according to the present disclosure can further comprise, before, after, or substantially at the same time as step A3, a step of providing at least one strip, wherein the strip at least partially covers the film ends. The strip can have a thickness that is equal to, greater than or smaller than the thickness of the film comprising at least a first layer and at least one further layer. All details regarding the at least one strip are as disclosed herein for the closure.

A strip can be provided on the inner surface of the tube or on the outer surface of the tube, or both. If a strip is provided on the inner surface, then it can be provided in or on the shaping form, particularly in or on a mandrel, for example guided in a groove or recess in a mandrel arranged to place the strip in register with the longitudinal join of the tube body to be obtained. If a strip is provided on the outer surface, then it can be provided after formation of the join, or substantially at the same time as formation of the join. If the strip is provided after formation of the join, then this can be done by attaching a pre-formed strip, covering at least a portion of the longitudinal extent of the join, preferably substantially the entire longitudinal extent of the join, for example by means of heat-bonding or by using one or more adhesives, or both. In the case of the continuous application, the strip can be on the inner surface or on the outer surface of the join, or on both the inner and the outer surfaces.

According to one aspect of the method, the strip is provided by extruding a bead of a plastic material in a molten state so that it is deposited on and covers at least a portion of at least one face of the longitudinal join, or at least a portion of both faces of the longitudinal join. This method can be employed on the outer surface, or on the inner surface, or both. Employing this aspect of the method, if the longitudinal join is a welded join, particularly a butt-welded join, the energy need to produce the weld can be provided by the bead.

After forming the join, a layer can be provided that covers the strip and at least a part of the outer surface of the outer part, particularly that covers the strip and substantially the entire outer surface of the outer part. The details regarding such a covering layer are as disclosed regarding the closure of the present disclosure.

In method step B, the inner part is provided. The inner part can be provided pre-formed, or can be formed *in situ* at substantially the same time as forming the outer part, or can be formed *in situ* after forming the outer part. The inner part is formed from an inner part plastic material, in particular a thermoplastic material or a thermoplastic composition, as described herein, for example in a moulding method, for example compression moulding or injection molding. Further suitable methods are described in connection with the closures according to the present disclosure. If the inner part head is desired to be embossed, this is preferably effected by means of a mould, during formation of the inner part. In a compression moulding method, for example, method step B can comprise at least the following steps:
B1. providing a molten thermoplastic composition;
B2. providing the molten thermoplastic composition to a first part of a mould;
B3. with a second part of the mould, compressing the molten thermoplastic composition in the first part of the mould to form the closure inner part; and
B4. optionally providing the closure inner part with a sealing means (or a sealing element).

If an injection moulding method is employed, method steps B2 and B3 are adapted accordingly, in ways known to the skilled person, for example such that the providing in step B2 is by means of injection. The moulding steps in method step B can be used to pre-form the inner part, or to form the inner part *in situ.*

If the inner part is provided pre-formed in method step B, the provision of the inner part in method step B can comprise a step of arranging the pre-formed inner part on a form, particularly on a mandrel, before method step A. In a subsequent method step A, the film is wrapped around the form or mandrel comprising the pre-formed inner part, and the join in the outer part is formed as disclosed herein, such that the outer part is formed directly around the inner part, which is enclosed circumferentially within the tubular outer part. Alternatively, a pre-formed inner part can be inserted into a pre-formed tubular outer part.

In method step C, the closure inner part is affixed to the closure outer part. If the inner part is provided pre-formed in method step B, as described herein, the closure inner part may be affixed to the closure outer part by means of at least one of physical and chemical means such as interference means, heat-bonding, welding, or adhesive means, as disclosed regarding the closures of the present disclosure. Either the inner part or the outer part or both, may be provided with bonding means, for example adhesion means, where suitable fixing means are as disclosed herein.

If the inner part is formed *in situ,* for example by means of compression moulding or injection moulding, method step C can comprise at least the following steps:
C1. arranging the tubular outer part on a form, for example on a mandrel;
C2. substantially at the same time as, or shortly after, forming the closure inner part, for example by means of moulding, for example by injection moulding or compression moulding, for example as described for step B3, cooperating the form or the mandrel with the mould such that the formed, for example compressed, but still at least partially molten thermoplastic composition contacts at least a part of the inner surface of the tubular outer part, particularly at substantially the entire inner circumference of the tubular outer part; and
C3. cooling the thermoplastic composition such that the closure inner part and the closure outer part are fixed together.

Before, during or after method step C., the outer part can be formed into a tapered shape. For example, a cylindrical tubular film that has been cut into lengths suitable for a closure can be stretched into a tapered shape as described herein.

It is also possible that the inner surface of the film is provided with bonding or adhesive means that are capable of fixing the inner part to the outer part, or of contributing to the fixing of the inner part to the outer part.

It is possible that step A and at least one of steps B and C are carried out discontinuously. It is also possible that step A and at least one of steps B and C are carried out continuously. Thus, for example, steps A and B may be carried out continuously, and step C discontinuously with respect to steps A and B; or steps B and C may be carried out continuously, and step A discontinuously with respect to steps B and C; or all of steps A, B and C may be carried out discontinuously. It is preferred according to one aspect of the method according to the present disclosure that all of steps A, B and C are carried out continuously relative to each other, i.e. the method according to the present disclosure is a continuous method.

If a cap, for example a decorative metal cap, is to be used to cover the head of the closure, it is affixed, generally by adhesive means, after the inner part and the outer part have been fixed together.

The appearance of the closure can be modified by decorating the outer part, for example the outer part outer surface or an outer part film layer that is visible externally, for example an inner decorative layer that is overlaid with a transparent layer. The outer part can be, for example, coloured, varnished, printed or otherwise decorated, or any combination of two or all of coloured, varnished, printed and otherwise decorated, in particular coloured and decorated with indicia. Colouring may be, for example, by means of printing and/or varnishing. Another method of colouring or decorating is by means of spray coating, either on the outermost surface, or on an inner layer, for example an inner aluminum layer, that is subsequently overcoated with a clear polymeric film.

The method according to the present disclosure thus can further comprise a step of decorating and/or printing onto the film, in particular decorating and/or printing onto at least one layer of the film, before providing the film in method step A.

The method according to the present disclosure can further comprise a step of cutting the tubular film to a length L suitable for a closure.

A further aspect of the disclosure provides a method of closing a bottle with a closure as defined herein. The method comprises at least the steps of providing a bottle with at threaded neck finish; optionally filling the bottle with the desired bottle content, for example a beverage, for example wine; providing a closure according to the present disclosure; screwing the closure onto the threaded neck finish of the bottle; optionally rolling at least a portion of the closure, in particular at least a portion of the closure outer part, tight to the outer surface of the bottle neck. Any or all of these steps can be carried out in ways known to the skilled person. The rolling step can be by means of a known capsule application process. Rolling the closure outer part, for example the skirt thereof or the lower portion of the skirt, for example the portion below the level of the inner part, to the bottle neck can improve the aesthetics and also helps to maintain the tamper evident feature or pilfer proof means (e.g., pilfer proof element). The rolling process occurs after the closure is assembled with the bottle. A rolling step of this sort can be carried out for a cylindrical closure or a tapered closure.

The present disclosure also relates to closures prepared by methods disclosed herein. The disclosure herein regarding the closures according to the invention also applies to the closures prepared by methods disclosed herein.

The present disclosure also relates to a use of a closure as disclosed herein, or of a closure obtained according to a method as disclosed herein, to close a container, in particular a receptacle for beverages in the form of a bottle with a neck.

The present disclosure also relates to a container, in particular a receptacle for beverages in the form of a bottle with a neck, closed with a closure as disclosed herein, or with a closure obtained according to a method as disclosed herein. The product retaining container or receptacle may be of any desired shape, size and material. According to one aspect of the disclosure, the product retaining container or receptacle may be a wine bottle. A container closed with a closure according to the present disclosure can also be referred to as a closure system.

According to yet another aspect, the disclosure relates to a container comprising a closure as described herein, and a product. The container may be wholly or partially filled with any kind of product, in particular with foodstuffs, for example with liquids (e.g., wine or spirits) or solids (e.g., spices). According to one embodiment of the disclosure, the container is a wine bottle made of glass or plastic that is wholly or partially filled with wine and sealed with a closure as described herein.

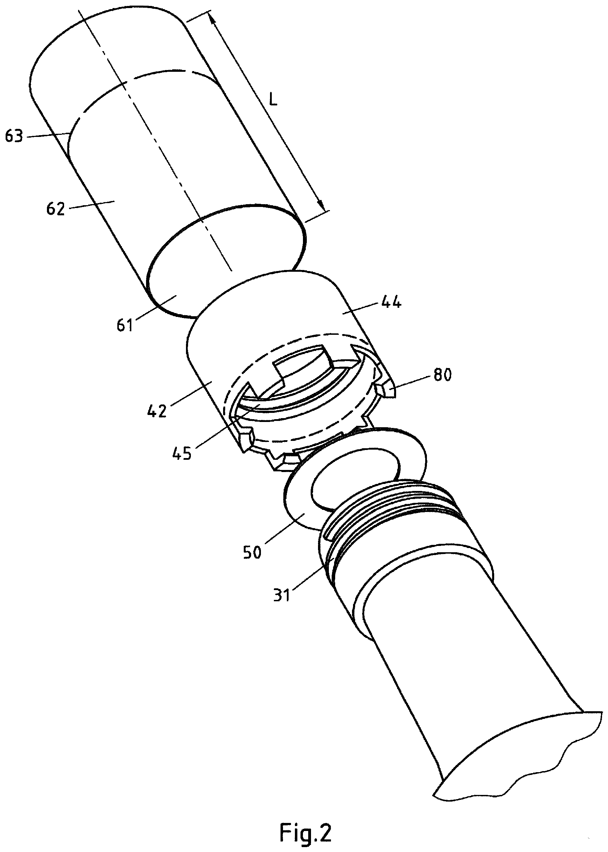

Referring now to Figures 1 and 2, the construction of a screw cap closure 1 adapted to fit on a wine bottle 2 is illustrated. In this embodiment, wine bottle 2 includes thread 31 on an upper opening of bottle neck 3. Screw cap closure 1 comprises an inner part 40 comprising an inner part inner surface 41, an inner part outer surface 42, an inner part head 43 and an inner part skirt 44. Sealing means (e.g., at least one sealing element) 50 sit inside inner part head 43. Sealing means 50 are depicted as a ring. Sealing means 50 can also be in the form of a disc covering the inner surface of inner part head 43. In an alternative aspect, not illustrated, the inner part head 43 itself provides a seal and no additional sealing means 50 are included. Inner part skirt 44 comprises inner thread 45 for co-operating with bottle thread finish 31 on neck 3 of bottle 2. Inner part outer surface 42 comprises an inner part outer peripheral surface 421 (not indicated in the Figures), which forms the outer peripheral surface of inner part skirt 44, and an inner part outer head surface 422 (not indicated in the Figures). Inner part outer head surface 422 generally forms the outermost surface of the head of closure 1 and can be printed, coloured, embossed, or decorated in any way known to the skilled person. Outer part 60 generally is in the form of a tube comprising outer part inner surface 61 and outer part outer surface 62. In some aspects, outer part 60 can comprise a head capping the tube (not shown). Outer part 60 encloses and hides at least inner part skirt 44, and outer part outer surface 62 forms the outer peripheral surface of closure 1. If outer part 60 includes a head, outer part 60 substantially encloses and hides both inner part skirt 44 and inner part head 43. At least a part of outer part inner surface 61 co-operates with at least a part of inner part outer surface 42, in particular at least a part of inner part outer peripheral surface 421, in particular substantially all or even all of inner part outer peripheral surface 421, but also optionally at least a part of inner part outer head surface 422, optionally substantially all or even all of inner part outer head surface 421, such that inner part 40 is affixed to outer part 60. The fixing together of inner part 40 and outer part 60 can be effected by any suitable means known to the skilled person. Suitable exemplary fixing means and methods are heating, for example melt bonding, adhesives, where, for example, any adhesive known to the skilled person and appearing suitable may be used, including one or more selected from the group consisting of glues, varnishes, plastics, and the like, including pressure-sensitive adhesives that don't rely on temperature, and any combination of two or more thereof. In addition or alternatively thereto, physical or mechanical fixing means may be employed, as known to the skilled person. The appearance of the closure can be modified by decorating outer part 60, either outer part outer surface 62, and/or a part of outer part 60 that is visible through outer part outer surface 62. For example, outer part 60 and/or outer part outer surface 62 can be, for example, coloured, varnished, printed or otherwise decorated, or any combination of two or all of coloured, varnished, printed and otherwise decorated, in particular coloured and decorated with indicia. Colouring may be, for example, by means of printing and/or varnishing and/or spray coating, as described herein. The decorations, colour, etc. can be added to outer part 60 before wrapping and joining film 70 to form a tubular film, in embodiments where outer part 60 comprises a longitudinal join. Alternatively, decorations, colour, etc. can be added to outer part 60 after wrapping and joining film 70 to form a tubular film, in embodiments where outer part 60 comprises a longitudinal join, or after extruding film 70 in a tubular form, and either before or after cutting the tubular film 70 into lengths L. Outer part 60 is depicted as cylindrical. The longitudinal axis is depicted with a dashed line in Fig. 2. Outer part 60 may also be tapered as disclosed herein, at least before application to a bottle. During application of a closure 1 with a tapered outer part 60, at least the tapered portion is preferably pressed in towards the bottle neck, for example by means of rollers.

At least inner part 40 comprises pilfer-proof means (or pilfer-proof element) 80, and outer part 60 has a length L sufficient to hide, at least before the first opening of closure 1, inner part skirt 44 and pilfer-proof means 80. Pilfer-proof means 80 can be for example, in the form of connecting the inner part skirt 44 by means of bridges to a guarantee seal that is held by a pilfer-proof ring on the neck 3 of the bottle 2, such that upon first opening the closure 1 the guarantee seal is separated from the inner part skirt 44. This and other types of pilfer-proof or tamper-evident means are well known to the skilled person.

In order to facilitate opening of the closure 1, the skirt of outer part 60 may be provided with a circular line of weakness 63 composed, for example, of a series of bridges, at least one, particularly all of these bridges being broken when the closure is opened for the first time, such that outer part 60 is separated into two parts. Alternatively or in addition thereto, an opening strip may be provided in the same location as the above mentioned perforation, which can be added to outer part 60 to facilitate separating the upper portion of outer part 60 from the lower portion of outer part 60 before initial opening.

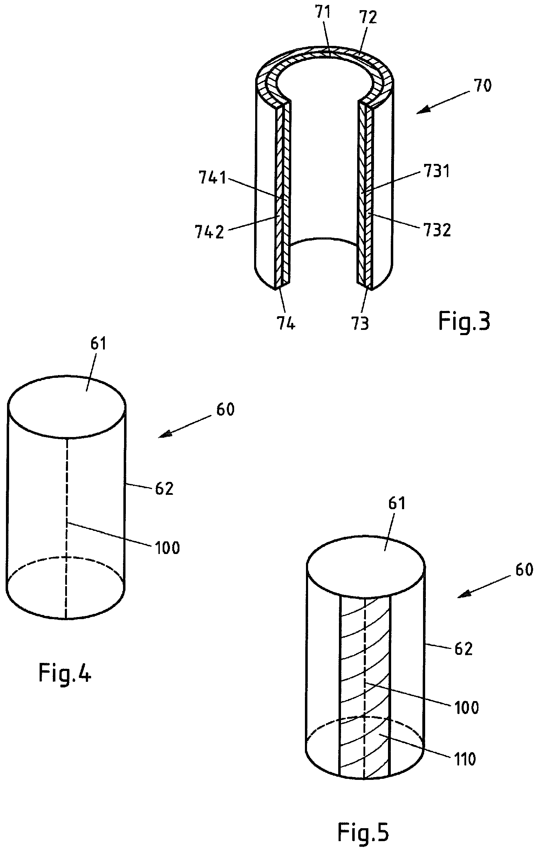

Referring to Fig. 3, outer part 60 comprises a film 70, the film 70 comprising at least a first layer 71 and at least one further layer 72. In Fig. 3, film 70 is shown as comprising two layers 71, 72. Although a bilayer film is shown for simplicity, film 70 can comprise more than two layers 71, 72, for example three, four or more layers 72. Films 70 comprising three layers 71, 72 are advantageous according to some aspects of the present disclosure. Film 70 preferably comprises two layers 71, 72, or three layers 71, 721, 722, or four layers 71, 721, 722, 723 (additional layers 721, 722, 723, etc. are not depicted in the Figures). Layer 72 (or layer 722, or layer 723, etc.) forms the outermost layer of outer part 60, and can be decorated as described herein. First layer 71 can comprise at least one outer part plastic material P as disclosed herein. At least one further layer 72 (or 721, 722, 723) may also comprise one or more outer part plastic materials P as disclosed herein. Alternatively, or in addition thereto, first layer 71 and/or at least one further layer 72 (or 721, 722, 723) comprises a non-plastic material M, for example a metal, for example aluminum, or any other metal known to the skilled person as being suitable for this purpose, as described herein. Additional further layers, if present, may each respectively comprise one or more selected from the group consisting of outer part plastic materials P as disclosed herein, other plastic materials as disclosed herein, non-plastic materials M, for example metals, as disclosed herein, adhesives, varnishes, colorants and combinations of one or more thereof. In order to maintain low weight while retaining stability, strength and function, film 70 may have a thickness in the ranges disclosed herein. Film 70 has mutually opposing film ends 73, 74. The first layer 71 of film 70 has first layer ends 731, 741 and the at least one further layer 72 of film 70 as further layer ends 732, 742. In the aspect of film 70 depicted in Fig. 3, film 70 has two layers and the at least one further layer is a second layer.

Referring to Fig. 4, an aspect of outer part 60 is shown comprising at least one longitudinal join 100. Longitudinal join 100 is formed during manufacture of outer part 60 according to this aspect of the present disclosure. In the manufacturing method, film 70 is wrapped around a suitably shaped form, for example a cylindrical form or a conical form or a frustoconical form, to form a cylindrical tube shape (illustrated), or a tapered tube shape (not illustrated), the tube having opposing film ends 73, 74 abutting each other or overlapping each other. It is also conceivable that respective portions of opposing film ends 73, 74 abut each other and other portions of opposing film ends 73, 74 overlap each other. Opposing film ends 73 and 74 are joined to each other to form longitudinal join 100. Longitudinal join 100 can be formed, for example, by means of welding or adhesion, and can comprise, for example, at least one of a welded portion, an adhesive portion, or both. The wrapping and joining preferably take place continuously as described herein.

Fig. 5 illustrates an aspect where outer part 60 comprises a strip 110 that covers at least a portion of film ends 73, 74. Strip 110 is depicted in Fig. 5 as being attached to outer part outer surface 62. Strip 110 can alternatively or additionally be attached to outer part inner surface 61. If strip 110 is attached to outer part outer surface 62 and to outer part inner surface 61, strip 110 can be two separate strips 110, or one strip 110 having a suitable length, with the caveat that a single strip 110 can only be attached to both inner surface 61 and outer surface 62 in the discontinuous manufacturing process of wrapping a precut film 70 around a form, but not in a continuous process.

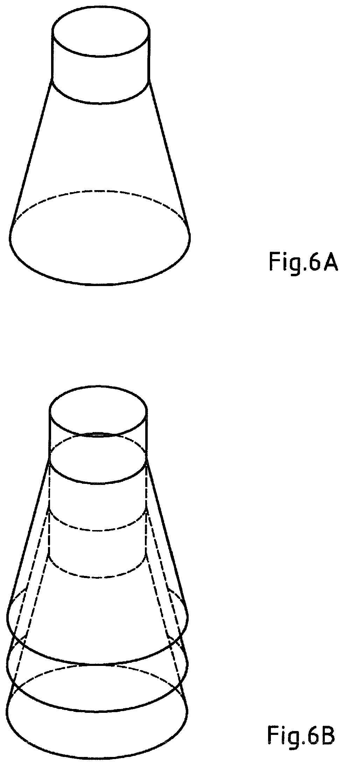

Fig. 6A shows a view of closure 1, in which outer part 60 encloses inner part 40 and is tapered below inner part 40. This form can be obtained, for example, by first making a cylindrical outer part 60 and subsequently tapering it into the depicted form while fixing to inner part 40, or by wrapping a precut portion of film 70 around a mandrel in a suitable shape. Outer part 60 can also be tapered along the entire length thereof, for example by wrapping a precut portion of film 70 around a mandrel in a suitable shape. Fig. 6B shows stacked closures 1 having a tapered outer part 60 as depicted in Fig. 6A. If outer part 60 is tapered along the entire length thereof it can also be stacked efficiently in a similar way. Thus with a tapered form, both outer part 60, and closure 1, can be stacked.

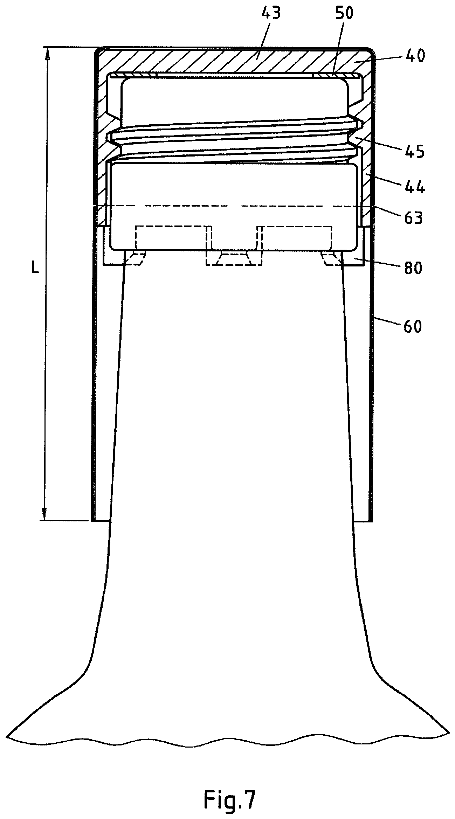

Fig. 7 depicts schematically a bottle neck 3 sealed using closure 1.

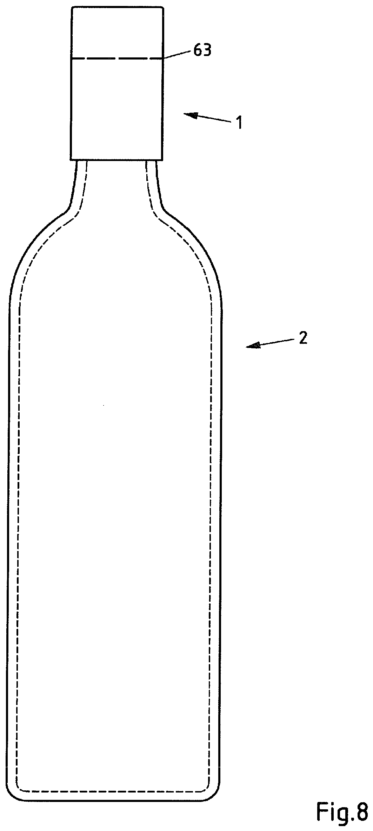

Fig. 8 illustrates the outer appearance of a bottle 2 closed with closure 1. An advantage of this type of screw cap closure 1 is that outer part 60 is not threaded, which improves the aesthetic quality of the cap.

All details regarding all aspects of the closures as disclosed herein and all components and parts thereof also apply to and form part of the disclosure of the method for manufacturing a closure, the uses of a closure, and a container or receptacle closed with a closure. Likewise, all details regarding all aspects of the methods and uses as disclosed herein also apply to and form part of the disclosure of the closure, the uses of a closure, and a container or receptacle closed with a closure. The disclosure is not limited to those combinations that are explicitly disclosed. The features of the aspects and embodiments, closures, methods and systems disclosed herein can be combined with each other in any way.

### Examples

Hereinafter, certain exemplary embodiments are described in more detail and specifically with reference to the examples, which, however, are not intended to limit the present disclosure.

### Example 1

### Closure with a butt-welded join

A screw cap closure 1 is produced, consisting of an inner part 40 comprising pilfer-proof means (or pilfer-proof element) 80, a liner 50, an outer part 60 comprising a join 100. The film 70 is built up of the following layers from bottom (first layer 71, facing the contained product) to top (further layer 72, outer layer of the screw cap): a layer 71 of a polyolefin, for example low-density polyethylene (LDPE); a layer 72 of a metal foil (typically aluminum or tin). A butt-welded join is formed as disclosed herein.

### Example 2

### Closure with an overlap-welded join

A screw cap closure 1 is produced, consisting of an inner part 40 comprising pilfer-proof means (or pilfer-proof element) 80, a liner 50, an outer part 60 comprising a join 100. The film 70 is built up of the following layers from bottom (first layer 71, facing the contained product) to top (further layer 72, outer layer of the screw cap): a layer 71 of a polyolefin, for example low-density polyethylene (LDPE); a layer 721 of a metal foil (typically aluminum or tin); a further LDPE polymer film layer 722. An overlap welded join is formed as disclosed herein.

### Example 3

### Closure with an overlap adhesive join

A screw cap closure 1 is produced, consisting of an inner part 40 comprising pilfer-proof means (or pilfer-proof element) 80, a liner 50, an outer part 60 comprising a join 100. The film 70 is built up of the following layers from bottom (facing the contained product) to top (further layer 72, outer layer of the screw cap): a layer 71 of a polyolefin, for example low-density polyethylene (LDPE); a layer 72 of a metal foil (typically aluminum or tin). An overlap adhesive join is formed as disclosed herein.

### Example 4

### Closure with an overlap-adhesive join

A screw cap closure 1 is produced, consisting of an inner part 40 comprising pilfer-proof means (or pilfer-proof element) 80, a liner 50, an outer part 60 comprising a join 100. The film 70 is built up of the following layers from bottom (first layer 71, facing the contained product) to top (further layer 72, outer layer of the screw cap): a layer 71 of a metal foil (typically aluminum or tin); a layer 721 of a polyolefin, for example low-density polyethylene (LDPE); and a second layer 722 of a metal foil (typically aluminum or tin). An overlap adhesive join is formed as disclosed herein.

As described herein, outer part 60 of closures 1 of Examples 1 to 4 can be produced in cylindrical form by wrapping a film 70 around a cylindrical form and joining, in a continuous process or in a discontinuous process. After cutting to a suitable length L, the cylindrical joined film can be used in cylindrical form or can be formed into a tapered form. A tapered form can also be prepared directly in a discontinuous process, by wrapping a film 70 round a conical or frustoconical form and joining, as described herein. The cylindrical form or the tapered form can be attached to the inner part 40. If desired, the cut cylindrical form can be tapered, for example by stretching, before, during or after attachment to the inner part 40.

It will thus be seen that the objects set forth above, among those made apparent from the preceding description, are efficiently obtained and, since certain changes may be made in carrying out the above method without departing from the scope of this disclosure, it is intended that all matter contained in the above description or shown in the accompanying drawings shall be interpreted as illustrative and not in a limiting sense. Furthermore, it should be understood that the details of the disclosure described in the foregoing detailed description are not limited to the specific embodiments shown in the drawings but are rather meant to apply to the disclosure in general as outlined in the summary and in the claims.

The disclosures herein regarding each and any aspect of the closures, of their manufacture, and of their uses, can be combined with each other in any way and combination, unless stated to the contrary. All details regarding all aspects of the closures as disclosed herein and all components and parts thereof also apply to and form part of the disclosure of the method for manufacturing a closure, the uses of a closure, and a container or receptacle closed with a closure. Likewise, all details regarding all aspects of the methods and uses as disclosed herein also apply to and form part of the disclosure of the closure, the uses of a closure, and a container or receptacle closed with a closure.

It is also to be understood that the following claims are intended to cover all of the generic and specific features of the disclosure herein described, and all statements of the scope of the disclosure which, as a matter of language, might be said to fall there between.

## Claims

1. A closure (1) for a receptacle for beverages in the form of a bottle (2) with a neck (3), the closure (1) comprising:
a) an inner part (40) comprising at least one inner part plastic material, the inner part (40) comprising an inner part inner surface (41), an inner part outer surface (42), an inner part head (43), and an inner part skirt (44), the inner part head (43) optionally comprising additional sealing means (50) and the inner part skirt (44) comprising an inner thread (45) for co-operating with a thread finish on the neck (3) of the bottle (2); and
b) an outer part (60) comprising an outer part inner surface (61) and an outer part outer surface (62), the outer part (60) enclosing and hiding at least the inner part skirt (44), optionally enclosing and hiding the inner part skirt (44) and the inner part head (43);
wherein at least a portion of the outer part inner surface (61) cooperates with at least a portion of the inner part outer surface (42) such that the inner part (40) and the outer part (60) are fixed together; and
wherein at least the inner part (40) comprises pilfer-proof means (80), and the outer part (60) has a length (L) sufficient to hide, at least before the first opening of the closure (1), the inner part skirt (44) and the pilfer-proof means (80); **characterised in that** the outer part (60) comprises a film (70), the film (70) comprises at least a first layer (71) and at least one further layer (72), at least one layer (71, 72) comprises at least one outer part plastic material P wherein the first layer (71) comprises a material having a first layer melting point, the at least one further layer (72) comprises a material having a further layer melting point, and the first layer melting point differs from the second layer melting point by at least 20°C
and the outer part (60) comprises at least one longitudinal join (100).

2. The closure (1) according to claim 1, wherein the film (70) has mutually opposing film ends (73, 74) and the longitudinal join (100) is in a region of the film ends (73, 74) and/or wherein at least a portion of the longitudinal join (100) is or comprises an adhesive join and/or wherein at least a portion of the longitudinal join (100) is or comprises a welded join and/or wherein at least a portion of the longitudinal join (100) is or comprises a butt-welded join and/or wherein the first layer (71) has first layer ends (731, 741) that are butt-welded, the at least one further layer (72) has further layer ends (732, 742), and any butt-welding of at least one further layer end (732, 742) is non-existent butt-welding.

3. The closure (1) according to any one of claims 1 or 2, wherein at least one layer (71, 72) of the film (70) is a weldable layer and/or wherein the film first layer (71) is an inner layer comprising the outer part inner surface (61), and at least one further film layer (72) is an outer layer comprising the outer part outer surface (62).

4. The closure (1) according to any one of claims 1 to 3, wherein the outer part (60) comprises at least one strip (110), wherein the at least one strip (110) covers at least a portion of the longitudinal join (100).

5. The closure (1) according to claim 4, wherein the at least one strip (110) covers the film ends (73, 74) and/or wherein the at least one strip (110) is attached to the outer part outer surface (62); or at least one strip (110) is attached to the inner part inner surface (41); or at least one strip (110) is attached to the outer part outer surface (62) and at least one further strip (110) is attached to the inner part inner surface (41).

6. The closure (1) according to any one of claims 1 to 5, wherein the outer part (60) comprises a straight skirt and optionally comprises an outer part head and/or wherein the outer part (60) forms an outer rotation surface which is of a constant radius and/or wherein the film (70) has a thickness in a range of from about 100 µm to about 600 µm and/or wherein at least one layer of the film (70) comprises one or more outer part plastic materials P selected from the group consisting of polyolefins, olefin block copolymers, polylactic acid, polylactic acid derivatives, polyurethanes, polyesters, copolyesters, polyamides, polystyrenes, styrene block copolymers, ethylene vinyl alcohol polymers, polyvinylidene chlorides, polyhydroxyalkanoates, blends of any one or more thereof, mixtures of any one or more thereof, or any other combination of one or more thereof and/or wherein at least one layer of the film (70) comprises one or more metals and/or wherein the closure (1) outer part (60) comprises indices and/or wherein the closure (1) inner part (40) comprises one or more inner part plastic materials, in particular one or more thermoplastic polymers selected from the group consisting of polyolefins, polyolefin block copolymers, thermoplastic polyurethanes, thermoplastic vulcanisates, thermoplastic polyesters, thermoplastic copolyesters, thermoplastic polyamides, polystyrene, styrene block copolymers, polylactic acid, polybutyrate adipate terephthalate, polyhydroxyalkanoates, blends of any one or more thereof, mixtures of any one or more thereof, or any other combination of one or more thereof and/or wherein the outer part (60) and the inner part (40) are fixed to each other by attachment means comprising at least one selected from mechanical attachment means and chemical attachment means.

7. A method for manufacturing a closure (1) for a receptacle for beverages in the form of a bottle (2) with a neck (3), the closure (1) comprising at least an outer part (60) and an inner part (40), the method comprising:
A. providing the closure outer part (60);
B. providing the closure inner part (40);
C. affixing the closure inner part (40) to the closure outer part (60),
**characterised in that** step A comprises at least the following steps:
A1. providing a film (70) comprising at least a first layer (71) and at least one further layer (72), at least one layer (71, 72) comprising at least one outer part plastic material P, wherein the film (70) comprises at least two mutually opposing film ends (73, 74);
A2. arranging the film (70) with the at least two mutually opposing film ends (73, 74) substantially abutting each other along at least a portion thereof or substantially overlapping each other along at least a portion thereof; and
A3. forming a longitudinal join (100) along at least a portion of the at least two mutually opposing film ends (73, 74) to form a tubular film (70) comprising a longitudinal join (100).

8. The method according to claim 7, wherein the first layer (71) has first layer ends (731, 741) and at least one further layer (72) has further layer ends (732, 742) and/or wherein in method step A2 the film (70) is arranged by wrapping around a form, in particular wherein the form is a mandrel.

9. The method according to any one of claims 7 to 8, wherein in method step A2 the film (70) is arranged in substantially cylindrical form or in tapered form and/or wherein the longitudinal join (100) formed in method step A3 comprises at least one of a welded portion and an adhesive portion and/or wherein the longitudinal join (100) is or comprises a welded join, in particular a butt-welded join.

10. The method according to any one of claims 7 to 9, wherein in step A2 the film ends (73, 74) are arranged abutting and in step A3 the abutting film ends (73, 74) are joined by butt-welding, preferably by successively heating and cooling and/or wherein the first layer ends (731, 741) are butt-welded and any butt-welding of at least one further layer end (732, 742) is non-existent butt-welding and/or wherein the longitudinal join (100) is or comprises an adhesive join and/or wherein the longitudinal join (100) is or comprises an overlapping join.

11. The method according to any one of claims 7 to 10, further comprising, before, after, or substantially at the same time as step A3, a step of providing at least one strip (110), wherein the strip (110) at least partially covers the film ends (73, 74).

12. The method according to claim 11, wherein the strip (110) has a thickness that is smaller than the thickness of the film (70) and/or wherein the strip (110) is provided by extruding a bead of a plastic material in a molten state so that it is deposited on and covers at least a portion of at least one face of the longitudinal join (100), or at least a portion of both faces of the longitudinal join (100), in particular wherein the longitudinal join (100) is a welded join, preferably a butt-welded join, and the energy need to produce the weld is provided by the bead.

13. The method according to any one of claims 7 to 12, wherein step A is carried out continuously.

14. The method according to any one of claims 7 to 13, further comprising a step of decorating and/or printing onto the film (70), or decorating and/or printing onto at least one layer (71, 72) of the film, before providing the film (70) in method step A and/or wherein before, during or after method step C. the outer part (60) is formed into a tapered shape.

15. A closure (1) prepared by a method according to any one of claims 7 to 14, in particular further defined according to any one of claims 1 to 6.

16. The use of a closure (1) according to any one of claims 1 to 6, or 15, or a closure (1) obtained according to a method according to any one of claims 7 to 14, to close a receptacle for beverages in the form of a bottle (2) with a neck (3).

17. A closure (1) system comprising a receptacle for beverages in the form of a bottle (2) with a neck (3), closed with a closure (1) according to any one of claims 1 to 6, or 15, or with a closure (1) obtained according to a method according to any one of claims 7 to 14.

## Patentansprüche

1. Verschluss (1) für einen Behälter für Getränke in der Form einer Flasche (2) mit einem Hals (3), wobei der Verschluss (1) Folgendes umfasst:
a) einen Innenteil (40), umfassend wenigstens ein Innenteilkunststoffmaterial, wobei der Innenteil (40) eine Innenteilinnenoberfläche (41), eine Innenteilaußenoberfläche (42), einen Innenteilkopf (43) und eine Innenteileinfassung (44) umfasst, wobei der Innenteilkopf (43) optional zusätzliche Dichtungsmittel (50) umfasst und die Innenteileinfassung (44) ein Innengewinde (45) zum Zusammenwirken mit einem Gewindeabschluss an dem Hals (3) der Flasche (2) umfasst; und
b) einen Außenteil (60), umfassend eine Außenteilinnenoberfläche (61) und eine Außenteilaußenoberfläche (62), wobei der Außenteil (60) wenigstens die Innenteileinfassung (44) umschließt und verbirgt, optional die Innenteileinfassung (44) und den Innenteilkopf (43) umschließt und verbirgt;
wobei wenigstens ein Abschnitt der Außenteilinnenoberfläche (61) mit wenigstens einem Abschnitt der Innenteilaußenoberfläche (42) derart zusammenwirkt, dass der Innenteil (40) und der Außenteil (60) aneinander befestigt sind; und
wobei wenigstens der Innenteil (40) Pilferproofmittel (80) umfasst und der Außenteil (60) eine Länge (L) aufweist, die ausreicht, um, wenigstens vor dem ersten Öffnen des Verschlusses (1), die Innenteileinfassung (44) und das Pilferproofmittel (80) zu verbergen;
**dadurch gekennzeichnet, dass** das Außenteil (60) eine Folie (70) umfasst, die Folie (70) wenigstens eine erste Schicht (71) und wenigstens eine weitere Schicht (72) umfasst, wenigstens eine Schicht (71, 72) wenigstens ein Außenteilkunststoffmaterial P umfasst, wobei die erste Schicht (71) ein Material mit einem Schmelzpunkt der ersten Schicht umfasst, die wenigstens eine weitere Schicht (72) ein Material mit einem Schmelzpunkt der weiteren Schicht umfasst und der Schmelzpunkt der ersten Schicht sich von dem Schmelzpunkt der zweiten Schicht um wenigstens 20 °C unterscheidet und der Außenteil (60) wenigstens eine Längsverbindung (100) umfasst.

2. Verschluss (1) nach Anspruch 1, wobei die Folie (70) einander gegenüberliegende Folienenden (73, 74) aufweist und die Längsverbindung (100) in einem Bereich der Folienenden (73, 74) ist und/oder wobei wenigstens ein Abschnitt der Längsverbindung (100) eine Klebstoffverbindung ist oder umfasst und/oder wobei wenigstens ein Abschnitt der Längsverbindung (100) eine Schweißverbindung ist oder umfasst und/oder wobei wenigstens ein Abschnitt der Längsverbindung (100) eine Stumpfschweißverbindung ist oder umfasst und/oder wobei die erste Schicht (71) erste Schichtenden (731, 741) aufweist, die stumpfgeschweißt sind, die wenigstens eine weitere Schicht (72) weitere Schichtenden (732, 742) aufweist und ein beliebiges Stumpfschweißen wenigstens eines weiteren Schichtendes (732, 742) ein nicht vorhandenes Stumpfschweißen ist.

3. Verschluss (1) nach einem der Ansprüche 1 oder 2, wobei wenigstens eine Schicht (71, 72) der Folie (70) eine schweißbare Schicht ist und/oder wobei die erste Schicht (71) eine Innenschicht ist, die die Außenteilinnenoberfläche (61) umfasst und wenigstens eine weitere Folienschicht (72) eine Außenschicht ist, die die Außenteilaußenoberfläche (62) umfasst.

4. Verschluss (1) nach einem der Ansprüche 1 bis 3, wobei der Außenteil (60) wenigstens einen Streifen (110) umfasst, wobei der wenigstens eine Streifen (110) wenigstens einen Abschnitt der Längsverbindung (100) bedeckt.

5. Verschluss (1) nach Anspruch 4, wobei der wenigstens eine Streifen (110) die Folienenden (73, 74) bedeckt und/oder wobei der wenigstens eine Streifen (110) an der Außenteilaußenoberfläche (62) angebracht ist; oder
wenigstens ein Streifen (110) an der Innenteilinnenoberfläche (41) angebracht ist; oder
wenigstens ein Streifen (110) an der Außenteilaußenoberfläche (62) angebracht ist und wenigstens ein weiterer Streifen (110) an der Innenteilinnenoberfläche (41) angebracht ist.

6. Verschluss (1) nach einem der Ansprüche 1 bis 5, wobei der Außenteil (60) eine gerade Einfassung umfasst und optional einen Außenteilkopf umfasst und/oder wobei der Außenteil (60) eine Außenrotationsoberfläche mit einem konstanten Radius ausbildet und/oder wobei die Folie (70) eine Dicke in einem Bereich von etwa 100 µm bis etwa 600 µm aufweist und/oder wobei wenigstens eine Schicht der Folie (70) ein oder mehrere Außenteilkunststoffmaterialien P umfasst, die aus der Gruppe, bestehend aus Folgendem, ausgewählt sind: Polyolefinen, Olefinblockcopolymeren, Polymilchsäure, Polymilchsäurederivaten, Polyurethanen, Polyestern, Copolyestern, Polyamiden, Polystyrolen, Styrolblockcopolymeren, Ethylenvinylalkoholpolymeren, Polyvinylidenchloriden, Polyhydroxyalkanoaten, Blends eines oder mehrerer davon, Gemischen eines oder mehrerer davon oder einer beliebigen Kombination eines oder mehrerer davon und/oder wobei wenigstens eine Schicht der Folie (70) ein oder mehrere Metalle umfasst und/oder wobei der Verschluss(1)außenteil (60) Indizes umfasst und/oder wobei der Verschluss(1)innenteil (40) ein oder mehrere Innenteilkunststoffmaterialien umfasst, insbesondere ein oder mehrere thermoplastische Polymere, die aus der Gruppe, bestehend aus Folgendem, ausgewählt sind: Polyolefinen, Polyolefinblockcopolymeren, thermoplastischen Polyurethanen, thermoplastischen Vulkanisaten, thermoplastischen Polyestern, thermoplastischen Copolyestern, thermoplastischen Polyamiden, Polystyrol, Styrolblockcopolymeren, Polymilchsäure, Polybutyratadipatterephthalat, Polyhydroxyalkanoaten, Blends eines oder mehrerer davon, Gemischen eines oder mehrerer davon oder einer beliebigen Kombination eines oder mehrerer davon und/oder wobei der Außenteil (60) und der Innenteil (40) durch Anbringungsmittel aneinander befestigt sind, die wenigstens eines umfassen, das aus mechanischen Anbringungsmittel und chemischen Anbringungsmitteln ausgewählt ist.

7. Verfahren zum Herstellen eines Verschlusses (1) für einen Behälter für Getränke in der Form einer Flasche (2) mit einem Hals (3), wobei der Verschluss (1) wenigstens einen Außenteil (60) und einen Innenteil (40) umfasst, wobei das Verfahren Folgendes umfasst:
A. Bereitstellen des Verschlussaußenteils (60);
B. Bereitstellen des Verschlussinnenteils (40);
C. Befestigen des Verschlussinnenteils (40) an das Verschlussaußenteil (60),
**dadurch gekennzeichnet, dass** Schritt A wenigstens die folgenden Schritte umfasst:
A1. Bereitstellen einer Folie (70), die wenigstens eine erste Schicht (71) und wenigstens eine weitere Schicht (72) umfasst, wobei wenigstens eine Schicht (71, 72) wenigstens ein Außenteilkunststoffmaterial P umfasst, wobei die Folie (70) wenigstens zwei einander gegenüberliegende Folienenden (73, 74) umfasst;
A2. Anordnen der Folie (70) mit den wenigstens zwei einander gegenüberliegenden Folienenden (73, 74), die im Wesentlichen entlang wenigstens eines Abschnitts davon aneinander anliegen oder sich im Wesentlichen entlang wenigstens eines Abschnitts davon überlappen; und
A3. Ausbilden einer Längsverbindung (100) entlang wenigstens eines Abschnitts der wenigstens zwei einander gegenüberliegenden Folienenden (73, 74), um eine Schlauchfolie (70) auszubilden, die eine Längsverbindung (100) umfasst.

8. Verfahren nach Anspruch 7, wobei die erste Schicht (71) erste Schichtenden (731, 741) aufweist und wenigstens eine weitere Schicht (72) weitere Schichtenden (732, 742) aufweist und/oder wobei in Verfahrensschritt A2 die Folie (70) durch Wickeln um eine Form herum angeordnet ist, insbesondere wobei die Form eine Spindel ist.

9. Verfahren nach einem der Ansprüche 7 bis 8, wobei in Verfahrensschritt A2 die Folie (70) in im Wesentlichen zylindrischer Form oder in konischer Form angeordnet ist und/oder wobei die in Verfahrensschritt A3 ausgebildete Längsverbindung (100) einen Schweißabschnitt und/oder einen Klebstoffabschnitt umfasst und/oder wobei die Längsverbindung (100) eine Schweißverbindung, insbesondere eine Stumpfschweißverbindung, ist oder umfasst.

10. Verfahren nach einem der Ansprüche 7 bis 9, wobei in Schritt A2 die Folienenden (73, 74) aneinander anliegend angeordnet sind und in Schritt A3 die aneinander anliegenden Folienenden (73, 74) durch Stumpfschweißen, bevorzugt durch sukzessives Erwärmen und Abkühlen, verbunden sind und/oder wobei die ersten Schichtenden (731, 741) stumpfgeschweißt sind und ein beliebiges Stumpfschweißen wenigstens eines weiteren Schichtendes (732, 742) ein nicht vorhandenes Stumpfschweißen ist und/oder wobei die Längsverbindung (100) eine Klebstoffverbindung ist oder umfasst und/oder wobei die Längsverbindung (100) eine überlappende Verbindung ist oder umfasst.

11. Verfahren nach einem der Ansprüche 7 bis 10, ferner umfassend vor, nach oder im Wesentlichen zu demselben Zeitpunkt wie Schritt A3, einen Schritt des Bereitstellens wenigstens eines Streifens (110), wobei der Streifen (110) wenigstens teilweise die Folienenden (73, 74) überdeckt.

12. Verfahren nach Anspruch 11, wobei der Streifen (110) eine Dicke aufweist, die geringer ist als die Dicke der Folie (70) und/oder wobei der Streifen (110) durch Extrudieren einer Kugel eines Kunststoffmaterials in einem geschmolzenen Zustand derart bereitgestellt wird, dass es auf wenigstens einem Abschnitt wenigstens einer Fläche der Längsverbindung (100) oder wenigstens einem Abschnitt beider Flächen der Längsverbindung (100) abgeschieden wird und diese bedeckt, insbesondere wobei die Längsverbindung (100) eine Schweißverbindung, bevorzugt eine Stumpfschweißverbindung, ist und der Energiebedarf, um die Schweißnaht herzustellen, durch die Kugel bereitgestellt wird.

13. Verfahren nach einem der Ansprüche 7 bis 12, wobei Schritt A fortlaufend ausgeführt wird.

14. Verfahren nach einem der Ansprüche 7 bis 13, ferner umfassend einen Schritt eines Verzierens und/oder Bedruckens auf die Folie (70) oder des Verzierens und/oder Bedruckens auf wenigstens eine Schicht (71, 72) der Folie, vor dem Bereitstellen der Folie (70) in Verfahrensschritt A und/oder wobei vor, während oder nach Verfahrensschritt C der Außenteil (60) in eine konische Form ausgebildet wird.

15. Verschluss (1), hergestellt durch ein Verfahren nach einem der Ansprüche 7 bis 14, insbesondere ferner definiert nach einem der Ansprüche 1 bis 6.

16. Verwenden eines Verschlusses (1) nach einem der Ansprüche 1 bis 6 oder 15 oder eines Verschlusses (1), der gemäß einem Verfahren nach einem der Ansprüche 7 bis 14 erhalten wird, um einen Behälter für Getränke in der Form einer Flasche (2) mit einem Hals (3) zu verschließen.

17. Verschluss(1)system, umfassend einen Behälter für Getränke in der Form einer Flasche (2) mit einem Hals (3), der mit einem Verschluss (1) nach einem der Ansprüche 1 bis 6 oder 15 oder mit einem Verschluss (1), der gemäß einem Verfahren nach einem der Ansprüche 7 bis 14 erhalten wird, verschlossen ist.

## Revendications

1. Fermeture (1) d'un récipient de boissons sous la forme d'une bouteille (2) dôté d'un col (3), la fermeture (1) comprenant :
a) une partie intérieure (40) comprenant au moins une matière plastique de la partie intérieure, la partie intérieure (40) comprenant une surface intérieure de la partie intérieure (41), une surface extérieure de la partie intérieure (42), une tête de la partie intérieure (43), et une jupe de la partie intérieure (44), la tête de la partie intérieure (43) comprenant éventuellement des moyens d'étanchéité additionnels (50) et la jupe de la partie intérieure (44) comprenant un filetage intérieur (45) destiné à coopérer avec une finition à filetage au niveau du col (3) de la bouteille (2) ; et
b) une partie extérieure (60) comprenant une surface intérieure de la partie extérieure (61) et une surface extérieure de la partie extérieure (62), la partie extérieure (60) enfermant et cachant au moins la jupe de la partie intérieure (44), enfermant et cachant éventuellement la jupe de la partie intérieure (44) et la tête de la partie intérieure (43) ;
dans laquelle au moins une partie de la surface intérieure de la partie extérieure (61) coopère avec au moins une partie de la surface extérieure de la partie intérieure (42), de sorte que la partie intérieure (40) et la partie extérieure (60) sont fixées ensemble ; et
dans laquelle au moins la partie intérieure (40) comprend des moyens inviolables (80), et la partie extérieure (60) a une longueur (L) suffisante pour cacher, au moins avant la première ouverture de la fermeture (1), la jupe de la partie intérieure (44) et les moyens inviolables (80) ; **caractérisée en ce que** la partie extérieure (60) comprend un film (70), le film (70) comprend au moins une première couche (71) et au moins une couche supplémentaire (72), au moins une couche (71, 72) comprend au moins une matière plastique P de la partie extérieure, dans laquelle la première couche (71) comprend un matériau comportant un premier point de fusion de couche, ladite couche supplémentaire (72) comprend une matière comportant un autre point de fusion de couche et le point de fusion de la première couche se distingue d'au moins 20 °C du point de fusion de la deuxième couche
et la partie extérieure (60) comprend au moins une jointure longitudinale (100).

2. Fermeture (1) selon la revendication 1, dans laquelle le film (70) comporte des extrémités de film mutuellement opposées (73, 74) et la jointure longitudinale (100) se trouve dans une région des extrémités de film (73, 74) et/ou dans laquelle au moins une partie de la jointure longitudinale (100) est une jointure adhésive ou comprend celle-ci et/ou dans laquelle au moins une partie de la jointure longitudinale (100) est une jointure soudée ou comprend celle-ci et/ou dans laquelle au moins une partie de la jointure longitudinale (100) est une jointure soudée bout à bout ou comprend celle-ci et/ou dans laquelle la première couche (71) comporte des extrémités de première couche (731, 741) qui sont soudées bout à bout, ladite couche supplémentaire (72) comporte des extrémités de couche supplémentaire (732, 742), et un soudage bout à bout quelconque d'au moins une extrémité de couche supplémentaire (732, 742) est un soudage bout à bout inexistant.

3. Fermeture (1) selon l'une quelconque des revendications 1 ou 2, dans laquelle au moins une couche (71, 72) du film (70) est une couche soudable et/ou dans laquelle la première couche (71) du film est une couche intérieure comprenant la surface intérieure de la partie extérieure (61), et au moins une couche de film supplémentaire (72) est une couche extérieure comprenant la surface extérieure de la partie extérieure (62).

4. Fermeture (1) selon l'une quelconque des revendications 1 à 3, dans laquelle la partie extérieure (60) comprend au moins une bande (110), dans laquelle ladite bande (110) recouvre au moins une partie de la jointure longitudinale (100).

5. Fermeture (1) selon la revendication 4, dans laquelle ladite bande (110) recouvre les extrémités de film (73, 74) et/ou dans laquelle ladite bande (110) est attachée à la surface extérieure de la partie extérieure (62) ; ou au moins une bande (110) est attachée à la surface intérieure de la partie intérieure (41) ; ou au moins une bande (110) est attachée à la surface extérieure de la partie extérieure (62) et au moins une bande supplémentaire (110) est attachée à la surface intérieure de la partie intérieure (41).

6. Fermeture (1) selon l'une quelconque des revendications 1 à 5, dans laquelle la partie extérieure (60) comprend une jupe droite et comprend éventuellement une tête de la partie extérieure et/ou dans laquelle la partie extérieure (60) forme une surface de rotation extérieure qui est d'un rayon constant et/ou dans laquelle le film (70) a une épaisseur dans une plage d'environ 100 µm à environ 600 µm et/ou dans laquelle au moins une couche de film (70) comprend une ou plusieurs matières plastiques P de la partie extérieure choisies dans le groupe constitué par les polyoléfines, les copolymères blocs oléfiniques, l'acide polylactique, les dérivés d'acide polylactique, les polyuréthanes, les polyesters, les copolyesters, les polyamides, les polystyrènes, les copolymères blocs styréniques, les polymères éthylène-alcool vinylique, les chlorures de polyvinylidène, les polyhydroxyalcanoates, les assemblages d'un ou de plusieurs de ceux-ci, les mélanges d'un ou plusieurs de ceux-ci, ou une autre combinaison quelconque d'un ou plusieurs de ceux-ci et/ou dans laquelle au moins une couche de film (70) comprend un ou plusieurs métaux et/ou dans laquelle la partie extérieure (60) de fermeture (1) comprend des indices et/ou dans laquelle la partie intérieure (40) de fermeture (1) comprend une ou plusieurs matières plastiques de la partie intérieure, en particulier un ou plusieurs polymères thermoplastiques choisis dans le groupe constitué par les polyoléfines, les copolymères blocs polyoléfiniques, les polyuréthanes thermoplastiques, les vulcanisats thermoplastiques, les polyesters thermoplastiques, les copolyesters thermoplastiques, les polyamides thermoplastiques, le polystyrène, les copolymères blocs styréniques, l'acide polylactique, le téréphtalate d'adipate de polybutyrate, les polyhydroxyalcanoates, les assemblages d'un ou de plusieurs de ceux-ci, les mélanges d'un ou de plusieurs de ceux-ci, ou une autre combinaison quelconque d'un ou de plusieurs de ceux-ci et/ou dans laquelle la partie extérieure (60) et la partie intérieure (40) sont fixées l'une à l'autre par des moyens d'attache comprenant les moyens d'attache mécaniques et/ou les moyens d'attache chimiques.

7. Procédé de fabrication d'une fermeture (1) d'un récipient de boissons sous la forme d'une bouteille (2) dôté d'un col (3), la fermeture (1) comprenant au moins une partie extérieure (60) et une partie intérieure (40), le procédé consistant à :
A. fournir la partie extérieure de fermeture (60) ;
B. fournir la partie intérieure de fermeture (40) ;
C. fixer la partie intérieure de fermeture (40) sur la partie extérieure de fermeture (60),
**caractérisé en ce que** l'étape A comprend au moins les étapes suivantes :
A1. fournir un film (70) comprenant au moins une première couche (71) et au moins une couche supplémentaire (72), au moins une couche (71, 72) comprenant au moins une partie extérieure en matière plastique P, dans lequel le film (70) comprend au moins deux extrémités de film mutuellement opposées (73, 74) ;
A2. disposer le film (70) à l'aide desdites extrémités de film mutuellement opposées (73, 74) venant sensiblement en butée le long d'au moins une partie de celui-ci ou se chevauchant sensiblement le long d'au moins une partie de celui-ci ; et
A3. former une jointure longitudinale (100) le long d'au moins une partie desdites extrémités de film mutuellement opposées (73, 74) pour former un film (70) tubulaire comprenant une jointure longitudinale (100).

8. Procédé selon la revendication 7, dans lequel la première couche (71) comporte des extrémités de première couche (731, 741) et au moins une couche supplémentaire (72) comporte des extrémités de couche supplémentaire (732, 742) et/ou dans lequel, à l'étape de procédé A2, le film (70) est disposé en l'enveloppant autour d'une forme, en particulier dans lequel la forme est un mandrin.

9. Procédé selon l'une quelconque des revendications 7 à 8, dans lequel à l'étape de procédé A2, le film (70) est disposé sous une forme sensiblement cylindrique ou sous une forme conique et/ou dans lequel la jointure longitudinale (100) formée à l'étape de procédé A3 comprend une partie soudée et/ou une partie adhésive et/ou dans lequel la jointure longitudinale (100) est une jointure soudée ou comprend celle-ci, en particulier une jointure soudée bout à bout.

10. Procédé selon l'une quelconque des revendications 7 à 9, dans lequel à l'étape A2, les extrémités de film (73, 74) sont disposées en butée et, à l'étape A3, les extrémités de film (73, 74) en butée sont jointes par soudage bout à bout, de préférence par chauffage et refroidissement successifs et/ou dans lequel les extrémités de première couche (731, 741) sont soudées bout à bout et tout soudage bout à bout d'au moins une extrémité de couche supplémentaire (732, 742) est inexistant et/ou dans lequel la jointure longitudinale (100) est une jointure adhésive ou comprend celle-ci et/ou dans lequel la jointure longitudinale (100) est une jointure chevauchante ou comprend celle-ci.

11. Procédé selon l'une quelconque des revendications 7 à 10, comprenant en outre, avant, après ou sensiblement en même temps que l'étape A3, une étape de fourniture d'au moins une bande (110), dans lequel la bande (110) recouvre au moins partiellement les extrémités de film (73, 74).

12. Procédé selon la revendication 11, dans lequel la bande (110) a une épaisseur inférieure à l'épaisseur du film (70) et/ou dans lequel la bande (110) est fournie par l'extrusion d'un cordon d'une matière plastique à l'état fondu de telle manière qu'elle soit déposée sur au moins une partie d'au moins une face de la jointure longitudinale (100) et recouvre celle-ci, ou au moins une partie des deux faces de la jointure longitudinale (100), en particulier dans lequel la jointure longitudinale (100) est une jointure soudée, de préférence une jointure soudée bout à bout, et l'énergie nécessaire pour produire le soudage est fournie par le cordon.

13. Procédé selon l'une quelconque des revendications 7 à 12, dans lequel l'étape A est réalisée en continu.

14. Procédé selon l'une quelconque des revendications 7 à 13, comprenant en outre une étape de décoration et/ou d'impression sur le film (70), ou de décoration et/ou d'impression sur au moins une couche (71, 72) du film, avant la fourniture du film (70) à l'étape de procédé A et/ou dans lequel avant, pendant ou après l'étape de procédé C, la partie extérieure (60) est réalisée sous forme conique.

15. Fermeture (1) préparée par un procédé selon l'une quelconque des revendications 7 à 14, en particulier définie plus précisément selon l'une quelconque des revendications 1 à 6.

16. Utilisation d'une fermeture (1) selon l'une quelconque des revendications 1 à 6, ou 15, ou d'une fermeture (1) obtenue selon un procédé selon l'une quelconque des revendications 7 à 14, pour fermer un récipient de boissons sous la forme d'une bouteille (2) dôté d'un col (3).

17. Système de fermeture (1) comprenant un récipient de boissons sous la forme d'une bouteille (2) dôté d'un col (3), fermé par une fermeture (1) selon l'une quelconque des revendications 1 à 6, ou 15, ou avec une fermeture (1) obtenue selon un procédé selon l'une quelconque des revendications 7 à 14.
